# EUROPEAN PATENT APPLICATION

(11) **EP 4 701 265 A1**
(43) Date of publication of application: **25.02.2026**
(21) Application number: 24802819.3
(22) Date of filing: 28.04.2024
(51) Int. Cl.: H04W 36/00

(54) **TIMING ADVANCE ACQUISITION METHOD AND APPARATUS**

(30) Priority: 11.05.2023 CN 202310532291
(71) Applicant: Huawei Technologies Co., Ltd., Shenzhen, Guangdong 518129 (CN)
(72) Inventor: GU, Zhifang, Shenzhen, Guangdong 518129 (CN); YOU, Chunhua, Shenzhen, Guangdong 518129 (CN); ZHANG, Hongzhuo, Shenzhen, Guangdong 518129 (CN)
(74) Representative: Gill Jennings & Every LLP
(86) International application number: PCT/CN2024/090439
(87) International publication number: WO 2024/230535

(57) **Abstract**

This application provides a timing advance acquisition method and an apparatus. The method includes: A first network device receives a first message from a second network device, where the first message indicates a first TA and includes first information, and the first information includes one or more of the following: identification information of a first random access preamble and information about a first time-frequency position; identification information of a first terminal device; or the identification information of the first random access preamble, the information about the first time-frequency position, and the identification information of the first terminal device; and the first network device sends the first TA to the first terminal device based on the first information. In the method, the first network device may determine, based on information about a terminal device corresponding to the first TA, that the first TA corresponds to the first terminal device, and send the first TA to the first terminal device, to improve accuracy of the TA obtained by the terminal device.

## Description

### CROSS-REFERENCE TO RELATED APPLICATIONS

This application claims priority to Chinese Patent Application No. 202310532291.8, filed with the China National Intellectual Property Administration on May 11, 2023 and entitled "TIMING ADVANCE ACQUISITION METHOD AND APPARATUS", which is incorporated herein by reference in its entirety

### TECHNICAL FIELD

This application relates to the field of communication technologies, and in particular, to a timing advance acquisition method and an apparatus.

### BACKGROUND

In a process in which a terminal device performs L1 and/or L2 triggered mobility (L1 and/or L2 triggered mobility, LTM) switch, to avoid an interruption caused by random access, the terminal device may access a target cell without random access. For example, the terminal device may send, by using an uplink grant (uplink grant, UL grant) of the target cell, an uplink message to a network device (for example, a target distributed unit (distributed unit, DU)) to which the target cell belongs. After receiving the uplink message, the target DU may consider that the terminal device successfully switches to the target cell. Before sending the uplink message, the terminal device needs to obtain a timing advance (timing advance, TA) of the target cell to complete uplink synchronization with the target cell. For example, before receiving a switch command from a network device (for example, a source DU) to which a source cell belongs, the terminal device may send a random access preamble to the target DU. After receiving the random access preamble, to avoid an interruption caused by random access, the target DU may not send a random access response (random access response, RAR) carrying the TA of the target cell to the terminal device, but send the TA of the target cell to the source DU through a central unit (central unit, CU), and the source DU may send the switch command or a downlink message carrying the TA of the target cell to the terminal device.

However, when a plurality of terminal devices of a same source DU to which source cells belong send a plurality of same random access preambles to the target DU, and the target DU obtains a plurality of different TAs of target cells through calculation, and sends the plurality of different TAs of the target cells to the same source DU through the CU, because the source DU cannot determine a terminal device corresponding to a TA of each target cell, a TA that is of a target cell and that is sent to any terminal device may be an inaccurate TA of the target cell. In addition, when a plurality of terminal devices of different source DUs to which source cells belong send a plurality of different random access preambles to the target DU, and the target DU obtains a plurality of different TAs of target cells through calculation, and sends the plurality of different TAs of the target cells to the different source DUs through the CU, because the CU cannot determine a source DU corresponding to a TA of each target cell, a TA that is of a target cell and that is sent to any source DU may be an inaccurate TA of the target cell. If any terminal device or any source DU receives an inaccurate TA of a target cell, uplink synchronization with the target cell is inaccurate, and switching from the source cell to the target cell fails.

### SUMMARY

Embodiments of this application provide a timing advance acquisition method and an apparatus, to improve accuracy of a timing advance that is of a target cell and that is obtained by a terminal device.

According to a first aspect, a timing advance acquisition method is provided. The method may be performed by a first network device or a chip in the first network device. An example in which the method is performed by the first network device is used. The first network device is a network device to which a first source cell of a first terminal device belongs. The method includes: The first network device may receive a first message from a second network device, where the second network device is a network device to which at least one candidate cell of the first terminal device belongs, the first message indicates a first timing advance TA, the first message includes first information, and the first information includes identification information of a first random access preamble and information about a first time-frequency position for sending the first random access preamble; identification information of the first terminal device; or the identification information of the first random access preamble, the information about the first time-frequency position, and the identification information of the first terminal device; and the first network device may send the first TA to the first terminal device based on the first information.

In the foregoing solution, when sending the first TA to the first network device, the second network device may synchronously send the first information, where the first information includes information about a terminal device corresponding to the first TA, for example, identification information of a random access preamble (namely, the identification information of the first random access preamble) sent by the terminal device corresponding to the first TA to the second network device, information about a time-frequency position at which the terminal device corresponding to the first TA sends the random access preamble (namely, the information about the first time-frequency position) to the second network device, and identification information of the terminal device corresponding to the first TA (namely, the identification information of the first terminal device). In this way, the first network device may determine, based on the first information, that the first TA corresponds to the first terminal device, and send the first TA to the first terminal device, to improve accuracy of the TA obtained by the terminal device.

In a possible implementation, before receiving the first message from the second network device, the first network device may further send a second message to the first terminal device, where the second message indicates the first terminal device to perform uplink synchronization with the second network device, and the second message includes one or more of the following information: the identification information of the first random access preamble and the information about the first time-frequency position; or information about a first beam direction used to determine the first time-frequency position.

In this implementation, the first network device may determine information about a resource used by the first terminal device to perform uplink synchronization with the second network device, and send the information about the resource to the first terminal device by using the second message, for example, the identification information of the first random access preamble sent by the first terminal device to the second network device, the information about the first time-frequency position at which the first terminal device sends the first random access preamble to the second network device, or the information about the first beam direction corresponding to the information about the first time-frequency position at which the first terminal device sends the first random access preamble to the second network device. Further, after receiving the first TA and the information about the terminal device corresponding to the first TA, the first network device may determine, based on the information about the terminal device corresponding to the first TA, whether the first TA corresponds to the first terminal device, to improve accuracy of the TA obtained by the terminal device.

In a possible implementation, the first network device may determine, based on the first information, that the first TA corresponds to the first terminal device; and the first network device may send the first TA to the first terminal device.

In this implementation, after receiving the first TA and the information about the terminal device corresponding to the first TA, the first network device may determine, based on the information about the terminal device corresponding to the first TA, whether the first TA corresponds to the first terminal device, to improve accuracy of the TA obtained by the terminal device.

In a possible implementation, the information about the first time-frequency position includes one or more of the following Information: identification information of a random access channel occasion; information about a random access-radio network temporary identifier; or indication information of a system frame number, indicating a value of at least one bit of the system frame number.

The one or more of the foregoing information is provided, so that the first network device can quickly learn of the time-frequency position at which the terminal device corresponding to the first TA sends the random access preamble to the second network device, and further determine whether the first TA corresponds to the first terminal device, to improve accuracy of the TA obtained by the terminal device.

In a possible implementation, the first information further includes first identification information, the first identification information indicates a first target cell of the first terminal device or the second network device, and the first target cell is any one of the at least one candidate cell.

The foregoing information is provided, so that the first network device can quickly learn of the target cell of the terminal device corresponding to the first TA or the network device to which the target cell belongs, and determine whether the first TA corresponds to the first terminal device. In this way, when source cells of a plurality of terminal devices belong to a same network device, and target cells of the plurality of terminal devices are different but network devices to which the target cells belong are the same, the network device to which the source cell belongs can determine a terminal device corresponding to a received TA, to improve accuracy of the TA obtained by the terminal device.

In a possible implementation, before sending the second message to the first terminal device, the first network device may further receive a third message from the second network device, where the third message indicates a first resource of the at least one candidate cell, and the first resource is used by a terminal device in the first source cell to perform uplink synchronization with the second network device.

In this implementation, the first network device may determine, by using the third message, information about the first resource used by the terminal device in the first source cell to perform uplink synchronization with the second network device. Further, after receiving the first TA and the information about the terminal device corresponding to the first TA, the first network device determines, depending on whether the information about the terminal device corresponding to the first TA matches the information about the first resource, whether the first TA corresponds to the first terminal device, to improve accuracy of the TA obtained by the terminal device.

In a possible implementation, the first network device may further determine a second resource from the first resource, where the second resource is used by the first terminal device to perform uplink synchronization with the second network device, and information about the second resource includes one or more of the following information: the identification information of the first random access preamble and the information about the first time-frequency position; or the information about the first beam direction.

In this implementation, the first network device may determine, from the information about the first resource used by the terminal device in the first source cell to perform uplink synchronization with the second network device, the information about the second resource used by the first terminal device to perform uplink synchronization with the second network device. Further, after receiving the first TA and the information about the terminal device corresponding to the first TA, the first network device determines, depending on whether the information about the terminal device corresponding to the first TA matches the information about the second resource, whether the first TA corresponds to the first terminal device, to improve accuracy of the TA obtained by the terminal device.

In a possible implementation, before receiving the third message from the second network device, the first network device may further send a fourth message to the second network device, where the fourth message is used to request the first resource, and the fourth message includes information about a quantity of first resources.

In this implementation, the second network device may determine, by using the fourth message, the information about the quantity of first resources used by the terminal device in the first source cell to perform uplink synchronization with the second network device, to ensure an appropriate quantity of resources that are of the at least one candidate cell and that are provided for the terminal device in the first source cell.

In a possible implementation, the fourth message further includes one or more of the following information: first identification information, indicating a first target cell of the first terminal device or the second network device, where the first target cell is any one of the at least one candidate cell; or second identification information, indicating the first source cell or the first network device.

The foregoing information is provided, so that the second network device can quickly learn that a resource of the first target cell or the second network device needs to be provided for the terminal device in the first source cell or served by the first network device. Further, after receiving a random access preamble from the terminal device in the first source cell, the second network device may determine that a TA obtained through calculation based on the random access preamble corresponds to the terminal device in the first source cell.

According to a second aspect, a timing advance acquisition method is provided. The method may be performed by a second network device or a chip in the second network device. An example in which the method is performed by the second network device is used. The second network device is a network device to which at least one candidate cell of a first terminal device belongs. The method includes: The second network device may receive a first random access preamble from the first terminal device; and the second network device may send a first message to a first network device, where the first network device is a network device to which a first source cell of the first terminal device belongs, the first message indicates a first TA, the first message includes first information, the first information indicates that the first TA corresponds to the first terminal device, and the first information includes: identification information of the first random access preamble and information about a first time-frequency position for sending the first random access preamble; identification information of the first terminal device; or the identification information of the first random access preamble, the information about the first time-frequency position, and the identification information of the first terminal device.

In the foregoing solution, when sending the first TA to the first network device, the second network device may synchronously send the first information, where the first information includes information about the first terminal device corresponding to the first TA, for example, the identification information of the first random access preamble sent by the first terminal device to the second network device, the information about the first time-frequency position at which the first terminal device sends the first random access preamble to the second network device, and the identification information of the first terminal device. In this way, the first network device may determine, based on the first information, that the first TA corresponds to the first terminal device, and send the first TA to the first terminal device, to improve accuracy of the TA obtained by the terminal device.

In a possible implementation, the information about the first time-frequency position includes one or more of the following Information: identification information of a random access channel occasion; information about a random access-radio network temporary identifier; or indication information of a system frame number, indicating a value of at least one bit of the system frame number.

The one or more of the foregoing information is provided, so that the first network device can quickly learn of the time-frequency position at which the terminal device corresponding to the first TA sends the random access preamble to the second network device, and determine whether the first TA corresponds to the first terminal device, to improve accuracy of the TA obtained by the terminal device.

In a possible implementation, the first information further includes first identification information, the first identification information indicates a first target cell of the first terminal device or the second network device, and the first target cell is any one of the at least one candidate cell.

The foregoing information is provided, so that the first network device can quickly learn of the target cell of the terminal device corresponding to the first TA or the network device to which the target cell belongs, and determine whether the first TA corresponds to the first terminal device. In this way, when source cells of a plurality of terminal devices belong to a same network device, and target cells of the plurality of terminal devices are different but network devices to which the target cells belong are the same, the network device to which the source cell belongs can determine a terminal device corresponding to a received TA, to improve accuracy of the TA obtained by the terminal device.

In a possible implementation, before receiving the first random access preamble from the first terminal device, the second network device may further send a third message to the first network device, where the third message indicates a first resource of the at least one candidate cell, and the first resource is used by a terminal device in the first source cell to perform uplink synchronization with the second network device.

In this implementation, the first network device may determine, by using the third message, information about the first resource used by the terminal device in the first source cell to perform uplink synchronization with the second network device. Further, after receiving the first TA and the information about the terminal device corresponding to the first TA, the first network device determines, depending on whether the information about the terminal device corresponding to the first TA matches the information about the first resource, whether the first TA corresponds to the first terminal device, to improve accuracy of the TA obtained by the terminal device.

In a possible implementation, before sending the third message to the first network device, the second network device may further receive a fourth message from the first network device, where the fourth message is used to request the first resource, and the fourth message includes information about a quantity of first resources.

In this implementation, the second network device may determine, by using the fourth message, the information about the quantity of first resources used by the terminal device in the first source cell to perform uplink synchronization with the second network device, to ensure an appropriate quantity of resources that are of the at least one candidate cell and that are provided for the terminal device in the first source cell.

In a possible implementation, the fourth message further includes one or more of the following information: first identification information, indicating a first target cell of the first terminal device or the second network device, where the first target cell is any one of the at least one candidate cell; or second identification information, indicating the first source cell or the first network device.

The foregoing information is provided, so that the second network device can quickly learn that a resource of the first target cell or the second network device needs to be provided for the terminal device in the first source cell or served by the first network device. Further, after receiving a random access preamble from the terminal device in the first source cell, the second network device may determine that a TA obtained through calculation based on the random access preamble corresponds to the terminal device in the first source cell.

In a possible implementation, when the first information includes the identification information of the first terminal device, before sending the first message to the first network device, the second network device may further receive the identification information of the first terminal device from the first terminal device.

In this implementation, the second network device may determine, based on the identification information of the first terminal device, that the first TA obtained through calculation based on the first random access preamble corresponds to the first terminal device, and then synchronously send the first information when sending the first TA to the first network device, where the first information includes the identification information of the first terminal device, so that the first network device may determine, based on the first information, that the first TA corresponds to the first terminal device, and send the first TA to the first terminal device, to improve accuracy of the TA obtained by the terminal device.

According to a third aspect, a timing advance acquisition method is provided. The method may be performed by a second network device or a chip in the second network device. An example in which the method is performed by the second network device is used. The second network device is a network device to which at least one candidate cell of a first terminal device belongs. The method includes: The second network device may receive a first random access preamble from the first terminal device; and the second network device sends a fifth message to a third network device, where the fifth message indicates a first TA, the fifth message includes second information, the second information indicates that the first TA corresponds to a first network device to which a first source cell of the first terminal device belongs, and the second information includes: identification information of the first random access preamble and information about a first time-frequency position for sending the first random access preamble; second identification information, indicating the first source cell or the first network device; or the identification information of the first random access preamble, the information about the first time-frequency position, and the second identification information.

In the foregoing solution, when sending the first TA to the third network device, the second network device may synchronously send the second information, where the second information includes information about the first terminal device corresponding to the first TA, for example, the identification information of the first random access preamble sent by the first terminal device to the second network device, the information about the first time-frequency position at which the first terminal device sends the first random access preamble to the second network device, and the second identification information indicating the first source cell of the first terminal device or the first network device to which the first source cell belongs. In this way, the third network device may determine, based on the second information, that the first TA corresponds to the network device to which the first source cell belongs, and send the first TA to the network device to which the first source cell belongs, to improve accuracy of the TA obtained by the network device to which the source cell of the terminal device belongs, and improve accuracy of the TA obtained by the terminal device.

In a possible implementation, the information about the first time-frequency position includes one or more of the following Information: identification information of a random access channel occasion; information about a random access-radio network temporary identifier; or indication information of a system frame number, indicating a value of at least one bit of the system frame number.

The one or more of the foregoing information is provided, so that the third network device can quickly learn of the time-frequency position at which the terminal device corresponding to the first TA sends the random access preamble to the second network device, and determine whether the first TA corresponds to the network device to which the first source cell of the first terminal device belongs, to improve accuracy of the TA obtained by the network device to which the source cell of the terminal device belongs, and improve accuracy of the TA obtained by the terminal device.

In a possible implementation, before receiving the first random access preamble from the first terminal device, the second network device may further send a sixth message to the third network device, where the sixth message indicates a fourth resource of the at least one candidate cell, the fourth resource is used by terminal devices in the first source cell and a second source cell of a second terminal device to perform uplink synchronization with the second network device, and a network device to which the second source cell belongs is a fourth network device.

In this implementation, the third network device may determine, by using the sixth message, information about the fourth resource used by the terminal devices in the first source cell and the second source cell to perform uplink synchronization with the second network device. Further, after receiving the first TA and the information about the terminal device corresponding to the first TA, the third network device determines, depending on whether the information about the terminal device corresponding to the first TA matches the information about the fourth resource, whether the first TA corresponds to the network device to which the first source cell of the first terminal device belongs, to improve accuracy of the TA obtained by the network device to which the first source cell of the terminal device belongs, and improve accuracy of the TA obtained by the terminal device.

In a possible implementation, before sending the sixth message to the third network device, the second network device may further receive a seventh message from the third network device, where the seventh message is used to request the fourth resource, and the seventh message includes information about a quantity of fourth resources.

In this implementation, the second network device may determine, by using the seventh message, the information about the quantity of fourth resources used by the terminal device in the first source cell to perform uplink synchronization with the second network device, to ensure an appropriate quantity of resources that are of the at least one candidate cell and that are provided for the terminal device in the first source cell and the second source cell.

In a possible implementation, the seventh message further includes one or more of the following information: first identification information, indicating a first target cell of the first terminal device or the second network device, where the first target cell is any one of the at least one candidate cell; the second identification information; third identification information, indicating a second target cell of the second terminal device or the second network device, where the second target cell is any one of the at least one candidate cell; or fourth identification information, indicating the second source cell.

The foregoing information is provided, so that the second network device can quickly learn that a resource of the first target cell or the second network device needs to be provided for the terminal device in the first source cell or served by the first network device, and a resource of the second target cell or the second network device needs to be provided for the terminal device in the second source cell or the first network device, where the first target cell and the second target cell may be a same cell or different cells. Further, after receiving a random access preamble from the terminal device in the first source cell or the second source cell, the second network device may determine that a TA obtained through calculation based on the random access preamble corresponds to the terminal device in the first source cell or the second source cell.

In a possible implementation, before sending the sixth message to the third network device, the second network device may further determine a first resource and a fifth resource from the fourth resource, where the first resource is used by the terminal device in the first source cell to perform uplink synchronization with the second network device, the fifth resource is used by the terminal device in the second source cell to perform uplink synchronization with the second network device, and the first resource is different from the fifth resource.

In this implementation, the second network device may determine, from the information about the fourth resource used by the terminal device in the first source cell and the second source cell to perform uplink synchronization with the second network device, information about the first resource used by the terminal device in the first source cell to perform uplink synchronization with the second network device, and information about the fifth resource used by the terminal device in the second source cell to perform uplink synchronization with the second network device. Further, after receiving a random access preamble from the terminal device in the first source cell or the second source cell, the second network device may determine that a TA obtained through calculation based on the random access preamble corresponds to the network device to which the first source cell or the second source cell belongs, to improve accuracy of the TA obtained by the network device to which the source cell of the terminal device belongs, and improve accuracy of the TA obtained by the terminal device.

In a possible implementation, when the second information includes the second identification information, and after receiving the first random access preamble from the first terminal device, the second network device may further determine the second identification information based on the first random access preamble and the first resource.

In this implementation, after receiving the random access preamble from the first terminal device, the second network device may determine that the TA obtained through calculation based on the random access preamble corresponds to the network device to which the first source cell of the first terminal device belongs, to improve accuracy of the TA obtained by the network device to which the source cell of the terminal device belongs, and improve accuracy of the TA obtained by the terminal device.

According to a fourth aspect, a timing advance acquisition method is provided. The method may be performed by a third network device or a chip in the third network device. An example in which the method is performed by the third network device is used. The method includes: The third network device may receive a fifth message from a second network device, where the second network device is a network device to which at least one candidate cell of a first terminal device belongs, the fifth message indicates a first TA, the fifth message includes second information, and the second information includes: identification information of the first random access preamble and information about a first time-frequency position for sending the first random access preamble; second identification information, indicating a first source cell of the first terminal device or a first network device to which the first source cell belongs; or the identification information of the first random access preamble, the information about the first time-frequency position, and the second identification information; and the third network device may send the fifth message to the first network device based on the second information.

In the foregoing solution, when sending the first TA to the third network device, the second network device may synchronously send the second information, where the second information includes information about the first terminal device corresponding to the first TA, for example, the identification information of the first random access preamble sent by the first terminal device to the second network device, the information about the first time-frequency position at which the first terminal device sends the first random access preamble to the second network device, and the second identification information indicating the first source cell of the first terminal device or the first network device to which the first source cell belongs. In this way, the third network device may determine, based on the second information, that the first TA corresponds to the first network device to which the first source cell belongs, and send the first TA to the first network device to which the first source cell belongs, to improve accuracy of the TA obtained by the network device to which the source cell of the terminal device belongs, and improve accuracy of the TA obtained by the terminal device.

In a possible implementation, the third network device may determine, based on the second information, that the first TA corresponds to the first network device, and send the fifth message to the first network device.

In this implementation, the third network device may determine, based on the second information, that the first TA corresponds to the first network device to which the first source cell belongs, and send the first TA to the first network device to which the first source cell belongs, to improve accuracy of the TA obtained by the network device to which the source cell of the terminal device belongs, and improve accuracy of the TA obtained by the terminal device.

In a possible implementation, the information about the first time-frequency position includes one or more of the following Information: identification information of a random access channel occasion; information about a random access-radio network temporary identifier; or indication information of a system frame number, indicating a value of at least one bit of the system frame number.

The one or more of the foregoing information is provided, so that the third network device can quickly learn of the time-frequency position at which the terminal device corresponding to the first TA sends the random access preamble to the second network device, and determine whether the first TA corresponds to the first network device to which the first source cell of the first terminal device belongs, to improve accuracy of the TA obtained by the network device to which the source cell of the terminal device belongs, and improve accuracy of the TA obtained by the terminal device.

In a possible implementation, before receiving the fifth message from the second network device, the third network device may further receive a sixth message from the second network device, where the sixth message indicates a fourth resource of the at least one candidate cell, the fourth resource is used by terminal devices in the first source cell and a second source cell of a second terminal device to perform uplink synchronization with the second network device, and a network device to which the second source cell belongs is a fourth network device; the third network device may further determine a first resource and a fifth resource from the fourth resource, where the first resource is used by the terminal device in the first source cell to perform uplink synchronization with the second network device, the fifth resource is used by the terminal device in the second source cell to perform uplink synchronization with the second network device, and the first resource is different from the fifth resource; and the third network device may further send an eighth message to the first network device, where the eighth message indicates the first resource.

In this implementation, the third network device may determine, by using the sixth message, information about the fourth resource used by the terminal device in the first source cell and the second source cell to perform uplink synchronization with the second network device, and determine, from the information about the fourth resource, information about the first resource used by the terminal device in the first source cell to perform uplink synchronization with the second network device, and information about the fifth resource used by the terminal device in the second source cell to perform uplink synchronization with the second network device. Further, after receiving the random access preamble from the first terminal device, the third network device determines that the TA obtained through calculation based on the random access preamble corresponds to the first network device to which the first source cell of the first terminal device belongs, to improve accuracy of the TA obtained by the network device to which the source cell of the terminal device belongs, and improve accuracy of the TA obtained by the terminal device.

In a possible implementation, the first resource is a resource corresponding to a first bandwidth part BWP of the at least one candidate cell, and the fifth resource is a resource corresponding to a second BWP of the at least one candidate cell.

In this implementation, the third network device may divide the fourth resource into the first resource and the fifth resource at a granularity of a cell, so that a BWP corresponding to a resource used by the terminal device in the first source cell to perform uplink synchronization with the second network device is different from a BWP corresponding to a resource used by the terminal device in the second source cell to perform uplink synchronization with the second network device.

In a possible implementation, the second information further includes identification information of the first BWP.

The one or more of the foregoing information is provided, so that the third network device can quickly learn of the BWP corresponding to the resource used by the terminal device corresponding to the first TA to perform uplink synchronization with the second network device, and determine whether the first TA corresponds to the first network device to which the first source cell of the first terminal device belongs, to improve accuracy of the TA obtained by the network device to which the source cell of the terminal device belongs, and improve accuracy of the TA obtained by the terminal device.

In a possible implementation, before receiving the sixth message from the second network device, the third network device may further send a seventh message to the second network device, where the seventh message is used to request the fourth resource, and the seventh message includes information about a quantity of fourth resources.

In this implementation, the second network device may determine, by using the seventh message, the information about the quantity of fourth resources used by the terminal device in the first source cell to perform uplink synchronization with the second network device, to ensure an appropriate quantity of resources that are of the at least one candidate cell and that are provided for the terminal device in the first source cell and the second source cell.

In a possible implementation, the seventh message further includes one or more of the following information: first identification information, indicating a first target cell of the first terminal device or the second network device, where the first target cell is any one of the at least one candidate cell; the second identification information; third identification information, indicating a second target cell of the second terminal device or the second network device, where the second target cell is any one of the at least one candidate cell; or fourth identification information, indicating the second source cell.

The foregoing information is provided, so that the second network device can quickly learn that a resource of the first target cell needs to be provided for the terminal device in the first source cell, and a resource of the second target cell needs to be provided for the terminal device in the second source cell, where the first target cell and the second target cell may be a same cell or different cells. Further, after receiving a random access preamble from the terminal device in the first source cell or the second source cell, the second network device may determine that a TA obtained through calculation based on the random access preamble corresponds to the terminal device in the first source cell or the second source cell.

According to a fifth aspect, a communication apparatus is provided. The apparatus includes a module/unit/technical means configured to perform the method according to any one of the first aspect or the possible implementations of the first aspect, the second aspect or the possible implementations of the second aspect, the third aspect or the possible implementations of the third aspect, or the fourth aspect or the possible implementations of the fourth aspect.

According to a sixth aspect, a communication apparatus is provided. The communication apparatus includes a processor and an interface circuit. The interface circuit is configured to receive a signal from another communication apparatus different from the communication apparatus and transmit the signal to the processor, or send a signal from the processor to another communication apparatus different from the communication apparatus. The processor is configured to implement, through a logic circuit or by executing code instructions, the method according to any one of the first aspect or the possible implementations of the first aspect, the second aspect or the possible implementations of the second aspect, the third aspect or the possible implementations of the third aspect, or the fourth aspect or the possible implementations of the fourth aspect.

Optionally, the communication apparatus further includes a memory.

According to a seventh aspect, a computer-readable storage medium is provided. The computer-readable storage medium includes a program or instructions. When the program or the instructions are run on a computer, the method according to any one of the first aspect or the possible implementations of the first aspect, the second aspect or the possible implementations of the second aspect, the third aspect or the possible implementations of the third aspect, or the fourth aspect or the possible implementations of the fourth aspect is performed.

According to an eighth aspect, a computer program product is provided. The computer program product includes instructions. When the instructions are run on a computer, the method according to any one of the first aspect or the possible implementations of the first aspect, the second aspect or the possible implementations of the second aspect, the third aspect or the possible implementations of the third aspect, or the fourth aspect or the possible implementations of the fourth aspect is performed.

According to a ninth aspect, a communication system is provided. The communication system includes the apparatus according to any one of the fifth aspect or the possible implementations of the fifth aspect.

### BRIEF DESCRIPTION OF DRAWINGS

FIG. 1 is a diagram of an architecture of a communication system according to an embodiment of this application;
FIG. 2 is a diagram of a CU-DU split architecture used by a network device according to an embodiment of this application;
FIG. 3a is a schematic flowchart of existing LTM switching;
FIG. 3b is a schematic flowchart of other existing LTM switching;
FIG. 3c is a schematic flowchart of still other existing LTM switching;
FIG. 3d is a diagram of an LTM switching scenario according to an instance of this application;
FIG. 3e is a diagram of another LTM switching scenario according to an instance of this application;
FIG. 3f is a diagram of still another LTM switching scenario according to an instance of this application;
FIG. 3g is a diagram of still another LTM switching scenario according to an instance of this application;
FIG. 4 is a schematic flowchart of a timing advance acquisition method according to an embodiment of this application;
FIG. 5 is a schematic flowchart of acquiring an uplink synchronization resource according to an embodiment of this application;
FIG. 6 is a diagram of acquiring identification information of a terminal device according to an embodiment of this application;
FIG. 7 is a schematic flowchart of another timing advance acquisition method according to an embodiment of this application;
FIG. 8 is another schematic flowchart of acquiring an uplink synchronization resource according to an embodiment of this application;
FIG. 9 is still another schematic flowchart of acquiring an uplink synchronization resource according to an embodiment of this application;
FIG. 10 is a schematic flowchart of still another timing advance acquisition method according to an embodiment of this application;
FIG. 11 is still another schematic flowchart of acquiring an uplink synchronization resource according to an embodiment of this application;
FIG. 12 is still another schematic flowchart of acquiring an uplink synchronization resource according to an embodiment of this application;
FIG. 13 is a diagram of a structure of a communication apparatus according to an embodiment of this application; and
FIG. 14 is a diagram of a structure of another communication apparatus according to an embodiment of this application.

### DESCRIPTION OF EMBODIMENTS

To make objectives, technical solutions, and advantages of embodiments of this application clearer, the following further describes embodiments of this application in detail with reference to the accompanying drawings.

The technical solutions in embodiments of this application may be applied to various communication systems, for example, a universal mobile telecommunications system (Universal Mobile Telecommunications System, UMTS), a code division multiple access (Code Division Multiple Access, CDMA) system, a wireless local area network (Wireless Local Area Network, WLAN), a sidelink (Sidelink) communication system, a 4th generation (4th generation, 4G) communication system, a 5th generation (5th generation, 5G) wireless communication system, a 6th generation (6th generation, 6G) communication system, or another future evolved system, or other various wireless communication systems using a radio access technology. The technical solutions in embodiments of this application may be used provided that there is a cell switch requirement in the communication system.

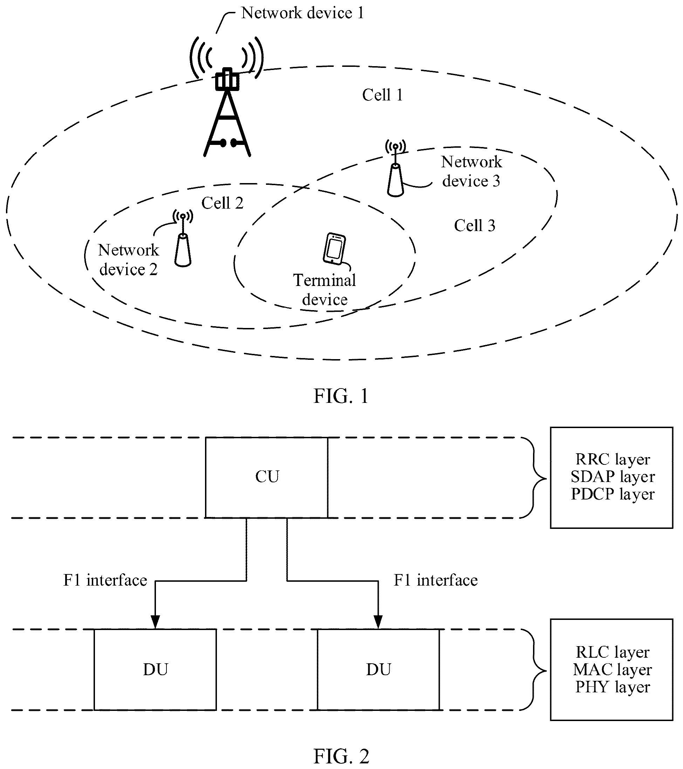

FIG. 1 is a diagram of an architecture of a communication system according to an embodiment of this application. As shown in FIG. 1, the communication system includes a network device and a terminal device.

The network device may be a base station (base station), an evolved NodeB (evolved NodeB, eNodeB), a transmission reception point (transmission reception point, TRP), a next generation NodeB (next generation NodeB, gNB) in a 5th generation (5th generation, 5G) mobile communication system, a next generation base station in a 6th generation (6th generation, 6G) mobile communication system, a base station in a future mobile communication system, an access node in a Wi-Fi system, or the like; or may be a module or a unit that completes a part of functions of the base station, for example, may be a central unit (central unit, CU) or a distributed unit (distributed unit, DU). The CU herein completes functions of a radio resource control (radio resource control, RRC) protocol and a packet data convergence protocol (packet data convergence protocol, PDCP) of the base station, and may further complete a function of a service data adaptation protocol (service data adaptation protocol, SDAP). The DU completes functions of a radio link control (radio link control, RLC) layer and a medium access control (medium access control, MAC) layer of the base station, and may further complete a part or all of functions of a physical (physical, PHY) layer. For specific descriptions of the foregoing protocol layers, refer to 3rd generation partnership project (3rd generation partnership project, 3GPP)-related technical specifications. The network device may be a macro base station, or may be a micro base station or an indoor base station, or may be a relay node, a donor node, or the like. A specific technology and a specific device form that are used for the network device are not limited in embodiments of this application.

In embodiments of this application, the network device may use a CU-DU split architecture. The CU-DU split architecture may also be referred to as a distributed deployment architecture. For example, FIG. 2 is a diagram of a CU-DU split architecture used by a network device according to an embodiment of this application. As shown in FIG. 2, the network device may logically include one CU and one or more DUs. Each DU may be connected to the CU through an F1 interface. Information exchange between different DUs may be completed based on forwarding performed by the CU. The CU and the DU may be physically disposed together, or may be physically disposed separately. This is not limited. The CU may support functions of RRC, PDCP, and SDAP. The DU may support functions of an RLC layer protocol, a MAC layer protocol, and a PHY layer protocol.

The terminal device may also be referred to as a terminal, a user equipment (user equipment, UE), a mobile station, a mobile terminal, or the like. The terminal device may be widely used in various scenarios, for example, device-to-device (device-to-device, D2D) communication, vehicle to everything (vehicle to everything, V2X) communication, machine-type communication (machine-type communication, MTC), internet of things (internet of things, IoT), virtual reality, augmented reality, industrial control, autonomous driving, telemedicine, smart grid, smart furniture, smart office, smart wearable, smart transportation, and smart city. The terminal device may be a mobile phone, a tablet computer, a computer with a wireless transceiver function, a wearable device, a vehicle, an uncrewed aerial vehicle, a helicopter, an airplane, a ship, a robot, a robotic arm, a smart home device, or the like. A specific technology and a specific device form that are used for the terminal device are not limited in embodiments of this application.

In embodiments of this application, the network device and the terminal device may be at fixed positions, or may be movable. The network device and the terminal device may be deployed on land, where the deployment includes indoor or outdoor, or handheld or vehicle-mounted deployment; may be deployed on water; or may be deployed on an airplane, a balloon, and a satellite in air. Application scenarios of the network device and the terminal device are not limited in embodiments of this application.

Roles of the network device and the terminal device may be relative. For example, an uncrewed aerial vehicle may be configured as a mobile network device. For a terminal device that accesses a network via the uncrewed aerial vehicle, the uncrewed aerial vehicle is a network device. However, for a network device accessed by the uncrewed aerial vehicle, the unmanned aerial vehicle is a terminal device.

A function of the network device may alternatively be performed by a module (for example, a chip) in the network device, or may be performed by a control subsystem including the function of the network device. The control subsystem including the function of the network device may be a control center in the foregoing application scenarios such as smart grid, industrial control, smart transportation, and smart city. A function of the terminal device may alternatively be performed by a module (for example, a chip or a modem) in the terminal device, or may be performed by an apparatus including the function of the terminal device.

In embodiments of this application, that the terminal device communicates with the network device means that the terminal device sends an uplink signal or uplink information to the network device, where the uplink information is carried on an uplink channel, and/or the network device sends a downlink signal or downlink information to the terminal device, where the downlink information is carried on a downlink channel. To communicate with the network device, the terminal device needs to establish a wireless connection to a cell controlled by the network device (in other words, the terminal device camps on the cell controlled by the network device). The cell that establishes the wireless connection to the terminal device is referred to as a serving cell of the terminal device (namely, a cell that serves the terminal device).

The terminal device may be in a coverage area of one or more cells (carriers), and one or more cells may serve the terminal device. For example, in the scenario shown in FIG. 1, the terminal device is in all of a coverage area of a cell 1 controlled by a network device 1, a coverage area of a cell 2 controlled by a network device 2, and a coverage area of a cell 3 controlled by a network device 3. The cell 1, the cell 2, and the cell 3 may all serve the terminal device. It should be noted that, in FIG. 1, an example in which one network device controls only one cell is used. During actual application, one network device may control a plurality of cells. When there are a plurality of cells serving the terminal device, the terminal device may operate in a carrier aggregation (Carrier Aggregation, CA), dual connectivity (Dual Connectivity, DC), or coordinated multipoint transmission/reception (coordinated multipoint transmission/reception, CoMP) manner, and one or more cells may provide, for the terminal device for operation, one or more of radio resources corresponding to more than one transmission parameter set, and the like.

Due to mobility of the terminal device and/or a change of a cell channel condition, the terminal device may perform serving cell switching. A serving cell on which the terminal device originally camps (or a cell from which the terminal device is wirelessly disconnected or a cell from which the terminal device switches) is referred to as a source cell, and a cell on which the terminal device newly camps (or a cell to which the terminal device newly establishes a wireless connection or a cell to which the terminal device switches) is referred to as a target cell. That is, that the terminal device performs serving cell switching means that the terminal device switches from the source cell to the target cell. The terminal device may camp on only one cell or simultaneously camp on a plurality of cells. The plurality of cells may be controlled by a same network device, or may be controlled by different network devices. This is not limited in embodiments of this application. Correspondingly, when performing serving cell switching, the terminal device may switch only to one serving cell, or may simultaneously switch to a plurality of serving cells. This is not limited in embodiments of this application.

In addition, that a cell communicates with the terminal device (for example, the cell sends a downlink signal to the terminal device, and/or the cell receives an uplink signal from the terminal device) means that a network device to which the cell belongs (for example, a base station that controls the cell) communicates with the terminal device. That cells communicate with each other, for example, one cell communicates with the other cell means, if the two cells respectively belong to different network devices (for example, two cells respectively controlled by different base stations), that a network device to which the one cell belongs communicates with a network device to which the other cell belongs (for example, a message is transmitted between the two network devices), or means, if the two cells belong to a same network device (for example, two cells controlled by a same base station), that a functional module that controls the one cell and that is in the network device exchanges, in the network device, signaling or data with a functional module that controls the other cell.

The terms "system" and "network" may be used interchangeably in embodiments of this application. "A plurality of" means two or more. In view of this, "a plurality of" may also be understood as "at least two" in embodiments of this application. "At least one" may be understood as one or more, for example, one, two, or more. For example, including at least one means that one, two, or more are included, and a specific included one is not limited. For example, if at least one of A, B, and C is included, A, B, C, A and B, A and C, B and C, or A, B, and C may be included. Similarly, understandings of descriptions such as "at least one" are also similar. The term "and/or" describes an association relationship between associated objects and indicates that three relationships may exist. For example, A and/or B may indicate the following three cases: Only A exists, both A and B exist, and only B exists. In addition, the character "/" generally indicates an "or" relationship between the associated objects.

Unless otherwise specified, ordinal numbers such as "first" and "second" mentioned in embodiments of this application are used to distinguish between a plurality of objects, and are not used to limit a sequence, a time sequence, a priority, or an importance degree of the plurality of objects. In addition, descriptions of "first" and "second" do not mean that objects are necessarily different.

The system architecture and the possible application scenario to which embodiments of this application are applicable are described in the foregoing content. To better understand the technical solutions in embodiments of this application, the following describes related technical features in embodiments of this application.

In L1 and/or L2 triggered mobility (L1 and/or L2 triggered mobility, LTM) switching in a CU-DU split architecture, L1 is a PHY layer, L2 is a MAC layer, an RLC layer, a PDCP layer, or an SDAP layer, and LTM means that a switching-related operation is mainly performed at L1 and/or L2. For example, a terminal device sends an L1 measurement result to a base station via PHY layer control signaling (carried on a physical uplink control channel (physical uplink control channel, PUCCH)). A PHY layer of the base station reads the L1 measurement result. The base station makes a switching decision based on the L1 measurement result, and sends the switching decision to the terminal device via L1 signaling and/or L2 signaling. The L1 signaling and/or the L2 signaling may be a message carried on a physical downlink control channel (physical downlink control channel, PDCCH), or may be a MAC control element (MAC control element, MAC CE).

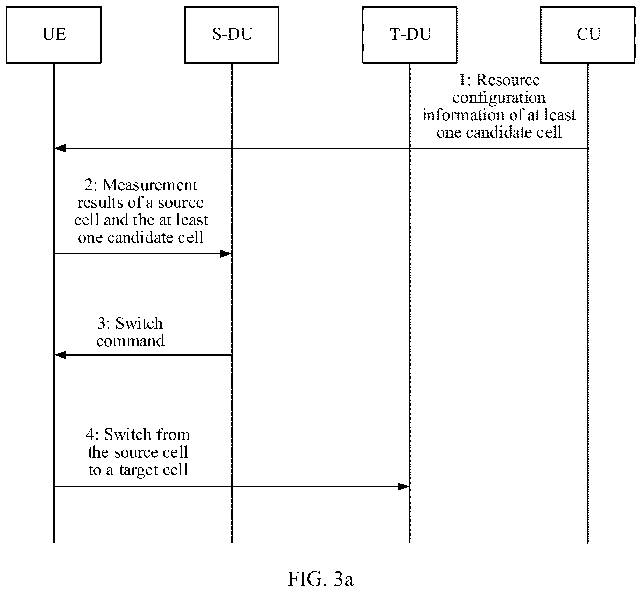

FIG. 3a is a schematic flowchart of existing LTM switching. As shown in FIG. 3a, a source DU (source DU, S-DU) is a DU to which a source cell of a UE belongs, that is, the source DU provides the source cell for the UE. A target DU (target DU, T-DU) is a DU to which a target cell of the UE belongs, that is, the target DU provides the target cell for the UE. Specific steps of performing cell switching between different DUs belonging to a same CU are as follows:
Step 1: The CU sends resource configuration information of at least one candidate cell to the UE through the source DU. Step 2: The UE sends measurement results of the source cell and the candidate cell to the source DU. Step 3: The source DU sends a switch command to the UE, and sends identification information of the target cell to the UE via L1 signaling and/or L2 signaling, where the target cell is any one of the at least one candidate cell, and the L1 signaling and/or the L2 signaling is still sent on a communication resource of the source cell. Step 4: The UE switches from the source cell to the target cell by performing LTM switching, accesses the target cell by using resource configuration information that is received in step 1 and that corresponds to the target cell, and starts to communicate with the target cell (to be specific, communicate with the target DU, or perform communication on a communication resource of the target cell) after the access succeeds. When accessing the target cell, the UE may access the target cell via random access, but the random access may cause an interruption, and therefore the UE may access the target cell without the random access. For example, the UE sends an uplink message to the target cell via an uplink grant (uplink grant, UL grant) (for example, a physical uplink shared channel (physical uplink shared channel, PUSCH)) of the target cell. After the target cell receives the uplink message, it may be considered that the UE successfully switches to the target cell.

However, before sending the uplink message to the target cell via the uplink grant of the target cell, the UE needs to obtain a timing advance (timing advance, TA) of the target cell, to complete uplink synchronization (namely, time domain synchronization) with the target cell, so as to determine a time domain position for sending the uplink message by using the TA of the target cell. The UE may obtain the TA of the target cell by using an early (early) random access channel (random access channel, RACH) solution and a without (without) random access response (random access response, RAR) solution. For example, before receiving a switch command from the source DU, the UE may send a random access preamble (preamble) (namely, a first message MSG1 in a random access process) to the target DU, so that the target DU obtains the TA of the target cell through calculation based on the random access preamble. After receiving the random access preamble and acquiring the TA of the target cell through calculation based on the random access preamble, the target DU may not send a random access response carrying the TA of the target cell to the UE (namely, a second message MSG2 in the random access process), but send the TA of the target cell to the source DU through the CU. The source DU may send a switch command or a downlink message carrying the TA of the target cell to the UE. Because the target DU does not send the random access response to the UE, the UE does not need to listen to the random access response from the target DU. Therefore, an interruption caused by random access is avoided.

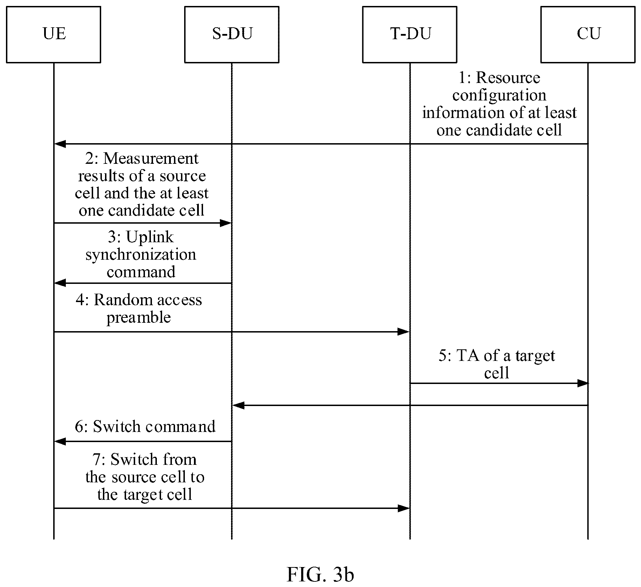

FIG. 3b is a schematic flowchart of other existing LTM switching. Steps shown in FIG. 3b are as follows:
Step 1: A CU sends resource configuration information of at least one candidate cell to a UE through a source DU. Step 2: The UE sends measurement results of a source cell and the candidate cell to the source DU. Step 3: The source DU sends an uplink synchronization command (for example, a PDCCH command (order)) to the UE, where the uplink synchronization command instructs the UE to send a random access preamble to a target cell. Step 4: The UE sends the random access preamble to a target DU according to the uplink synchronization command. Step 5: The target DU obtains a TA of the target cell through calculation based on the random access preamble, and sends the TA of the target cell to the source DU through the CU. Step 6: The source DU sends a switch command to the UE, where the switch command carries the TA of the target cell. Step 7: The UE performs LTM switching to switch from the source cell to the target cell.

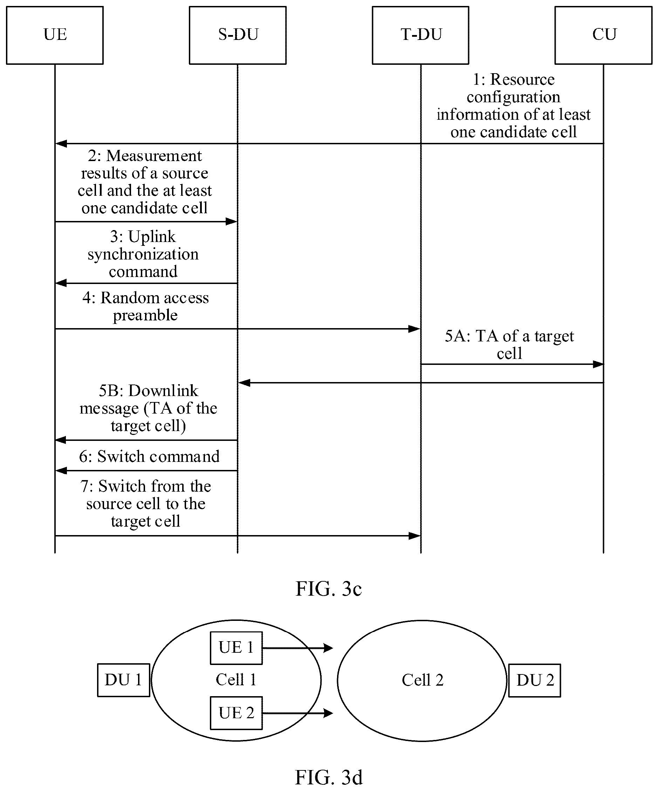

FIG. 3c is a schematic flowchart of still other existing LTM switching. Steps shown in FIG. 3c are as follows:
Step 1: A CU sends resource configuration information of at least one candidate cell to a UE through a source DU. Step 2: The UE sends measurement results of a source cell and the candidate cell to the source DU. Step 3: The source DU sends an uplink synchronization command (for example, a PDCCH order) to the UE, where the uplink synchronization command instructs the UE to send a random access preamble to a target cell. Step 4: The UE sends the random access preamble to a target DU according to the uplink synchronization command. Step 5A: The target DU obtains a TA of the target cell through calculation based on the random access preamble, and sends the TA of the target cell to the source DU through the CU. Step 5B: The source DU sends a downlink message to the UE, where the downlink message carries the TA of the target cell, and the downlink message may be a random access response or a MAC CE. Step 6: The source DU sends a switch command to the UE. Step 7: The UE performs LTM switching to switch from the source cell to the target cell.

However, in a scenario in which a plurality of UEs need to perform LTM switching to switch from source cells to target cells, source DUs to which the source cells of the plurality of UEs belong may be the same, or source DUs to which the source cells of the plurality of UEs belong may be different.

When the source DUs to which the source cells of the plurality of UEs belong are the same, because resources that are allocated by a same target cell to a same source DU and that are used for uplink synchronization are the same, the plurality of UEs may send a plurality of same random access preambles to a target DU. When the target DU obtains a plurality of different TAs of target cells through calculation based on the plurality of same random access preambles, and sends the plurality of different TAs of the target cells to the same source DU through a CU, because the source DU cannot determine a UE corresponding to a TA of each target cell, a TA of a target cell sent to any UE may be an inaccurate TA of the target cell. Consequently, uplink synchronization between the any UE and the target cell is inaccurate, and switching from the source cell to the target cell fails. For example, FIG. 3d is a diagram of an LTM switching scenario according to an instance of this application. As shown in FIG. 3d, source cells of a UE 1 and a UE 2 are both a cell 1, and target cells of the UE 1 and the UE 2 are both a cell 2. A DU to which the cell 1 belongs is a DU 1, in other words, source DUs of the UE 1 and the UE 2 are the DU 1. A DU to which the cell 2 belongs is a DU 2, in other words, target DUs of the UE 1 and the UE 2 are the DU 2. The UE 1 and the UE 2 send two same random access preambles to the DU 2. The DU 2 obtains two different TAs of the cell 2 through calculation based on the two same random access preambles, which are respectively a TA 1 and a TA 2, and sends the TA 1 and the TA 2 to the DU 1 through a CU. The DU 1 cannot determine a UE corresponding to the TA 1 and a UE corresponding to the TA 2. When the UE corresponding to the TA 1 needs to be the UE 1 and the UE corresponding to the TA 2 needs to be the UE 2, the DU 1 may send the TA 1 to the UE 2 and send the TA 2 to the UE 1, resulting in incorrect TAs of the cell 2 that are obtained by the UE 1 and the UE 2.

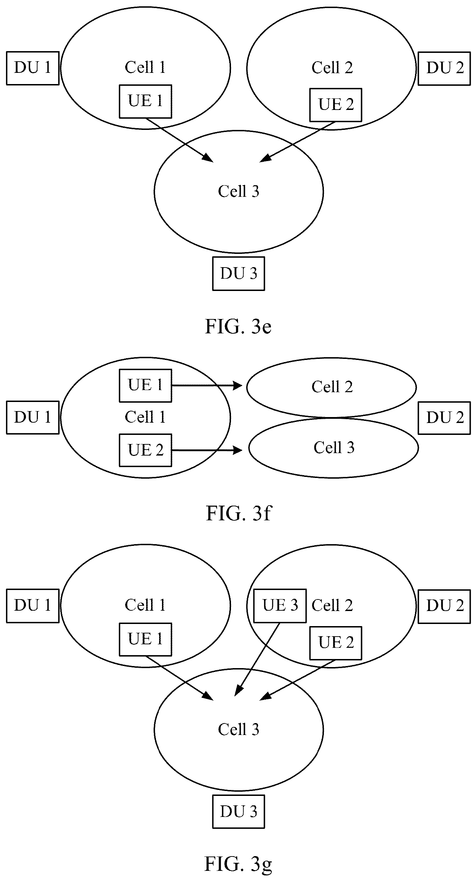

When source DUs to which the source cells of the plurality of UEs belong are different, because resources that are allocated by a same target cell to the different source DUs and that are used for uplink synchronization are different, the plurality of UEs may send a plurality of different random access preambles to a target DU. When the target DU obtains a plurality of different TAs of target cells through calculation based on the plurality of different random access preambles, and sends the plurality of different TAs of the target cells to the different source DUs through a CU, because the CU cannot determine a source DU corresponding to a TA of each target cell, a TA of a target cell sent to any source DU may be an inaccurate TA of the target cell. Consequently, a TA of a target cell sent by the any source DU to any UE may be an inaccurate TA of the target cell. As a result, uplink synchronization between the any UE and the target cell is inaccurate, and switching from the source cell to the target cell fails. For example, FIG. 3e is a diagram of another LTM switching scenario according to an instance of this application. As shown in FIG. 3e, a source cell of a UE 1 is a cell 1, a source cell of a UE 2 is a cell 2, and target cells of the UE 1 and the UE 2 are both a cell 3. A DU to which the cell 1 belongs is a DU 1, in other words, a source DU of the UE 1 is the DU 1. A DU to which the cell 2 belongs is a DU 2, in other words, a source DU of the UE 2 is the DU 2. A DU to which the cell 3 belongs is a DU 3, in other words, target DUs of the UE 1 and the UE 2 are the DU 3. The UE 1 and the UE 2 send two different random access preambles to the DU 2. The DU 2 obtains two different TAs of the cell 2 through calculation based on the two different random access preambles, which are respectively a TA 1 and a TA 2, and sends the TA 1 and the TA 2 to a CU. The CU cannot determine a DU corresponding to the TA 1 and a DU corresponding to the TA 2. When the DU corresponding to the TA 1 needs to be the DU 1 and the DU corresponding to the TA 2 needs to be the DU 2, the CU may send the TA 1 to the DU 2 and send the TA 2 to the DU 1, resulting in incorrect TAs of the cell 2 that are obtained by the DU 1 and the DU 2.

To resolve the foregoing problem, this application provides a timing advance acquisition method. The method may be applied to a scenario in which a plurality of terminal devices perform cell switching.

For example, in a scenario 1, a network device to which a source cell of a first terminal device (for example, referred to as a first source cell) and a source cell of a second terminal device (for example, referred to as a second source cell) belong is a first network device, a network device to which at least one candidate cell of the first terminal device and at least one candidate cell of the second terminal device belong is a second network device, the first terminal device switches between the first source cell and a first target cell, the first target cell is any one of the at least one candidate cell, the second terminal device switches between the second source cell and a second target cell, and the second target cell is any one of the at least one candidate cell. It may be understood that, in the scenario 1, the first source cell and the second source cell may be a same cell or different cells, and the first target cell and the second target cell may be a same cell or different cells. This is not limited in embodiments of this application.

When the first network device and the second network device use a CU-DU split architecture, there is a third network device between the first network device and the second network device, in other words, the third network device is a network device that transmits a message between the first network device and the second network device. The first network device and the second network device may be different DUs belonging to a same CU. For example, the first network device is a first DU belonging to a first CU, the second network device is a second DU belonging to the first CU, and the third network device may be the first CU. The first network device and the second network device may be different DUs not belonging to a same CU. For example, the first network device is a first DU belonging to a first CU, the second network device is a second DU belonging to a second CU, and the third network device may be the first CU and the second CU. This is not limited in embodiments of this application.

For example, refer to FIG. 3d. Source cells of a UE 1 and a UE 2 are both a cell 1, and target cells of the UE 1 and the UE 2 are both a cell 2. A DU to which the cell 1 belongs is a DU 1, in other words, source DUs of the UE 1 and the UE 2 are the DU 1. A DU to which the cell 2 belongs is a DU 2, in other words, target DUs of the UE 1 and the UE 2 are the DU 2. The UE 1 may switch between the cell 1 and the cell 2, and the UE 2 may switch between the cell 1 and the cell 2.

Alternatively, FIG. 3f is a diagram of still another LTM switching scenario according to an instance of this application. As shown in FIG. 3f, source cells of a UE 1 and a UE 2 are both a cell 1. A target cell of the UE 1 is a cell 2, and a target cell of the UE 2 is a cell 3. A DU to which the cell 1 belongs is a DU 1, in other words, source DUs of the UE 1 and the UE 2 are the DU 1. A DU to which the cell 2 and the cell 3 belong is a DU 2, in other words, target DUs of the UE 1 and the UE 2 are the DU 2. The UE 1 may switch between the cell 1 and the cell 2, and the UE 2 may switch between the cell 1 and the cell 3.

For another example, in a scenario 2, a network device to which a first source cell belongs is a first network device, a network device to which a second source cell belongs is a fourth network device, a network device to which at least one candidate cell of a first terminal device and at least one candidate cell of a second terminal device belong is a second network device, the first terminal device switches between the first source cell and a first target cell, the first target cell is any one of the at least one candidate cell, the second terminal device switches between the second source cell and a second target cell, and the second target cell is any one of the at least one candidate cell. It may be understood that, in the scenario 2, the first target cell and the second target cell may be a same cell or different cells. This is not limited in embodiments of this application.

When the first network device, the second network device, and the fourth network device use a CU-DU split architecture, there is a third network device between the first network device, the second network device, and the fourth network device, in other words, the third network device is a network device that transmits a message between the first network device, the second network device, and the fourth network device. The first network device, the second network device, and the fourth network device may be different DUs belonging to a same CU. For example, the first network device is a first DU belonging to a first CU, the second network device is a second DU belonging to the first CU, the fourth network device is a third DU belonging to the first CU, and the third network device may be the first CU. The first network device, the second network device, and the fourth network device may be different DUs not belonging to a same CU. For example, the first network device is a first DU belonging to a first CU, the second network device is a second DU belonging to a second CU, the fourth network device is a third DU belonging to a third CU, and the third network device may be the first CU, the second CU, and the third CU. This is not limited in embodiments of this application.

For example, refer to FIG. 3e. A source cell of a UE 1 is a cell 1, and a source cell of a UE 2 is a cell 2. Target cells of the UE 1 and the UE 2 are both a cell 3. A DU to which the cell 1 belongs is a DU 1, in other words, a source DU of the UE 1 is the DU 1. A DU to which the cell 2 belongs is a DU 2, in other words, a source DU of the UE 2 is the DU 2. A DU to which the cell 3 belongs is a DU 3, in other words, target DUs of the UE 1 and the UE 2 are both the DU 3. The UE 1 may switch between the cell 1 and the cell 3, and the UE 2 may switch between the cell 2 and the cell 3.

For still another example, in a scenario 3, a network device to which a first source cell belongs is a first network device, a network device to which a second source cell and a source cell of a third terminal device (for example, referred to as a third source cell) belong is a fourth network device, and a network device to which at least one candidate cell of a first terminal device, at least one candidate cell of a second terminal device, and at least one candidate cell of the third terminal device belong is a second network device. The first terminal device switches between the first source cell and a first target cell, where the first target cell is any one of the at least one candidate cell; the second terminal device switches between the second source cell and a second target cell, where the second target cell is any one of the at least one candidate cell; and the third terminal device switches between the third source cell and a third target cell, where the third target cell is any one of the at least one candidate cell. It may be understood that, in the scenario 3, the second source cell and the third source cell may be a same cell or different cells, and the first target cell, the second target cell, and the third target cell may be a same cell or different cells. This is not limited in embodiments of this application either.

For example, FIG. 3g is a diagram of still another LTM switching scenario according to an instance of this application. As shown in FIG. 3g, a source cell of a UE 1 is a cell 1, and source cells of the UE 2 and the UE 3 are a cell 2. Target cells of the UE 1, the UE 2, and the UE 3 are all a cell 3. A DU to which the cell 1 belongs is a DU 1, in other words, a source DU of the UE 1 is the DU 1. A DU to which the cell 2 belongs is a DU 2, in other words, source DUs of the UE 2 and the UE 3 are the DU 2. A DU to which the cell 3 belongs is a DU 3, in other words, target DUs of the UE 1, the UE 2, and the UE 3 are the DU 3. The UE 1 may switch between the cell 1 and the cell 3, the UE 2 may switch between the cell 2 and the cell 3, and the UE 2 may switch between the cell 2 and the cell 3.

According to the timing advance acquisition method provided in this application, when network devices to which source cells of a plurality of terminal devices (for example, the first terminal device and the second terminal device in the scenario 1, or the second terminal device and the third terminal device in the scenario 3) belong are a same network device, it is ensured that the network device (for example, the first network device or the fourth network device) to which the source cells of the plurality of terminal devices belong can determine a terminal device corresponding to each received timing advance. Alternatively, when network devices to which source cells of a plurality of terminal devices (for example, the first terminal device and the second terminal device in the scenario 2, the first terminal device and the second terminal device in the scenario 3, or the first terminal device and the third terminal device in the scenario 3) belong are different network devices, it is ensured that a network device (for example, the third network device) between a network device to which at least one candidate cell of the plurality of terminal devices belongs and the network devices to which the source cells of the plurality of terminal devices belong can determine a network device to which a source cell of a terminal device corresponding to each received timing advance belongs. Therefore, accuracy of a timing advance that is of a target cell and that is obtained by the terminal device is improved.

Further, this application may include three possible technical solutions for specifically whether network devices to which source cells of a plurality of terminal devices belong are a same network device or network devices to which source cells of a plurality of terminal devices belong are different network devices. For ease of description, the three possible technical solutions are respectively referred to as a solution 1, a solution 2, and a solution 3. The following separately describes in detail the solution 1, the solution 2, and the solution 3. It may be understood that, in embodiments of this application, only an LTM switching technology is used as an example. The technical solutions in embodiments of this application are also applicable to another switching technology in which a target cell is accessed without random access. It may be understood that, in a cell switching scenario in embodiments of this application, before cell switching occurs, a target cell is any one of at least one candidate cell; and when the cell switching occurs, the any candidate cell becomes the target cell. In description of embodiments of this application, communication interaction between a terminal device and a candidate cell may also be understood as communication interaction between the terminal device and a target cell, or communication interaction between a terminal device and a target cell may also be understood as communication interaction between the terminal device and a candidate cell, because the candidate cell subsequently becomes the target cell.

### Solution 1

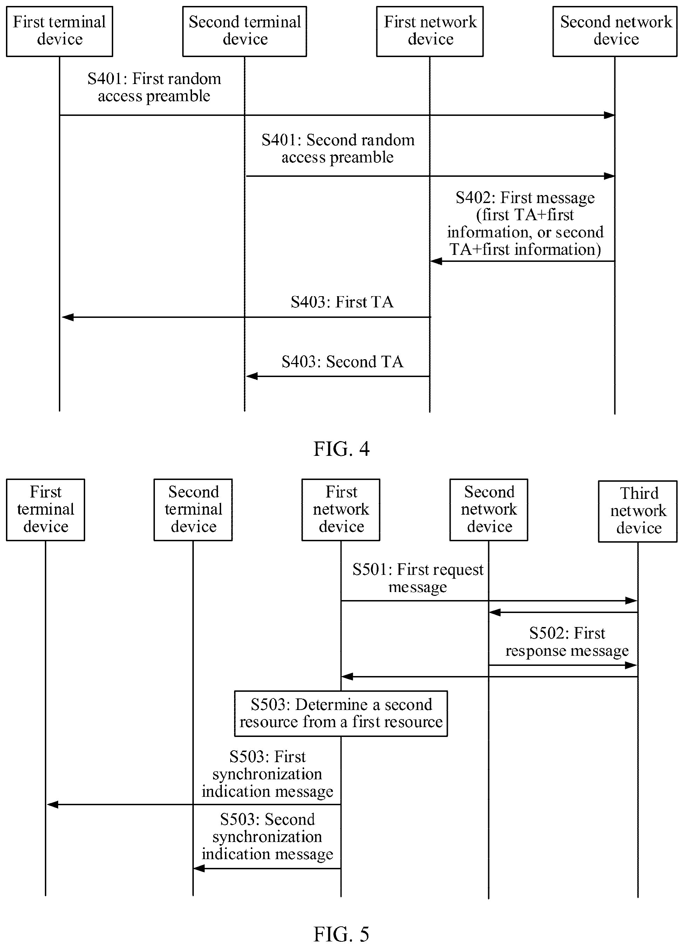

FIG. 4 is a schematic flowchart of a timing advance acquisition method according to an embodiment of this application. The method may be applied to, but is not limited to, the communication system shown in FIG. 1. The method may be applied to, but is not limited to, the foregoing scenario 1. In the scenario 1, the first source cell and the second source cell may be a same cell or different cells, and the first target cell and the second target cell may be a same cell or different cells. This is not limited in this embodiment of this application. For ease of description, in this embodiment of this application, an example in which the first source cell and the second source cell are a same cell is used. The first source cell and the second source cell are collectively referred to as a first source cell below. The method includes the following steps.

S401: A first terminal device sends a first random access preamble to a second network device, and correspondingly, the second network device receives a second random access preamble from the first terminal device. A second terminal device sends a second random access preamble to the second network device, and correspondingly, the second network device receives the second random access preamble from the second terminal device.

In this embodiment of this application, the first terminal device may send the first random access preamble to the second network device, and correspondingly, the second network device may receive the first random access preamble from the first terminal device. Similarly, the second terminal device may also send the second random access preamble to the second network device, and correspondingly, the second network device may also receive the second random access preamble from the second terminal device. It may be understood that the first random access preamble and the second random access preamble may be a same random access preamble or different random access preambles. This is not limited in this embodiment of this application.

The second network device may further obtain a first TA through calculation based on the first random access preamble from the first terminal device, and obtain a second TA through calculation based on the second random access preamble from the second terminal device.

For example, when a first target cell and a second target cell are a same cell, as shown in FIG. 3d, source cells of a UE 1 and a UE 2 are both a cell 1, and target cells of the UE 1 and the UE 2 are both a cell 2. A DU to which the cell 1 belongs is a DU 1, in other words, source DUs of the UE 1 and the UE 2 are the DU 1. A DU to which the cell 2 belongs is a DU 2, in other words, target DUs of the UE 1 and the UE 2 are the DU 2. The UE 1 and the UE 2 send two random access preambles to the DU 2. The DU 2 obtains two different TAs, which are respectively a TA 1 and a TA 2, of the cell 2 through calculation based on the two random access preambles.

Alternatively, when the first target cell and the second target cell are different cells, as shown in FIG. 3f, source cells of a UE 1 and a UE 2 are both a cell 1. A target cell of the UE 1 is a cell 2, and a target cell of the UE 2 is a cell 3. A DU to which the cell 1 belongs is a DU 1, in other words, source DUs of the UE 1 and the UE 2 are the DU 1. A DU to which the cell 2 and the cell 3 belong is a DU 2, in other words, target DUs of the UE 1 and the UE 2 are the DU 2. The UE 1 and the UE 2 send two random access preambles to the DU 2. The DU 2 obtains a TA of the cell 2 and a TA of the cell 3, which are respectively a TA 1 and a TA 2, through calculation based on the two random access preambles.

Based on an implementation process in FIG. 4, when a first network device and the second network device use a CU-DU split architecture, in other words, the first network device and the second network device are DUs, and a third network device is a CU, steps shown in FIG. 5 may be further performed in this application.

In S501, the first network device may send a first request message (or referred to as a fourth message) to the second network device through the third network device, and correspondingly, the second network device may receive the first request message from the first network device through the third network device.

The first request message may be used to request a first resource of at least one candidate cell. The first resource may be used by terminal devices (for example, the first terminal device and the second terminal device) in a first source cell to perform uplink synchronization with the second network device. Optionally, the first resource may alternatively be used by terminal devices (for example, the first terminal device and the second terminal device) served by the first network device to perform uplink synchronization with the second network device.

For example, information about the first resource may include one or more of the following information: identification information of a random access preamble sent by the terminal device in the first source cell when the terminal device performs uplink synchronization with the second network device, information about a time-frequency position at which the terminal device in the first source cell sends the random access preamble when the terminal device performs uplink synchronization with the second network device, and information about a beam direction corresponding to the information about the time-frequency position at which the terminal device in the first source cell sends the random access preamble when the terminal device performs uplink synchronization with the second network device. It may be understood that the information about the first resource at a granularity of the first source cell may alternatively be at a granularity of the first network device. To be specific, the information about the first resource may include one or more of the following information: identification information of a random access preamble sent by the terminal device served by the first network device when the terminal device performs uplink synchronization with the second network device, information about a time-frequency position at which the terminal device served by the first network device sends the random access preamble when the terminal device performs uplink synchronization with the second network device, and information about a beam direction corresponding to the information about the time-frequency position at which the terminal device served by the first network device sends the random access preamble when the terminal device performs uplink synchronization with the second network device. In this embodiment of this application, a candidate network device (or referred to as a target network device) (for example, the second network device) may allocate a first resource to each source cell (for example, the first source cell), or may allocate a first resource to each source network device (for example, the first network device). One allocated first resource may be provided by each candidate cell.

In an implementation, the first request message may include information about a quantity of requested first resources. The quantity of requested first resources may be obtained by the first network device based on a quantity of terminal devices in the first source cell or a quantity of terminal devices that are in the first source cell and that are configured with a cell managed by the second network device as a candidate cell. For example, if the first source cell is a cell 1, a cell managed by the second network device is a cell 2, terminal devices in the cell 1 include a terminal device 1 and a terminal device 2, and terminal devices that are in the cell 1 and that are configured with the cell 2 as a candidate cell include the terminal device 1 and the terminal device 2, the first network device may obtain, through calculation based on a quantity of terminal devices in the cell 1 or a quantity of terminal devices that are in the cell 1 and that are configured with the cell 2 as the candidate cell, a quantity of resources used by the terminal device in the cell 1 or the terminal device that is in the cell 1 and that is configured with the cell 2 as the candidate cell to perform uplink synchronization with the second network device, and indicate, in the first request message sent to the second network device, information about the quantity of resources used by the terminal device in the cell 1 or the terminal device that is in the cell 1 and that is configured with the cell 2 as the candidate cell to perform uplink synchronization with the second network device. For example, the quantity is a large quantity, a medium quantity, or a small quantity.

In another implementation, the first request message may further include one or more of the following information: First identification information, indicating the first target cell, and second identification information, indicating the first source cell. It may be understood that when the first target cell and the second target cell are different cells, the first request message may further include third identification information, indicating the second target cell. When the first source cell and a second source cell are different cells, the first request message may further include fourth identification information, indicating the second source cell. For example, if the first source cell is a cell 1 and the first target cell is a cell 2, the first network device may indicate identification information of the cell 1 and/or identification information of the cell 2 in the first request message sent to the second network device. The second network device may determine, based on the identification information of the cell 1 and the identification information of the cell 2, that the first request message is used to request to allocate a resource of the cell 2 to a terminal device in the cell 1, so that the terminal device in the cell 1 performs uplink synchronization with the cell 2. It may be understood that the first identification information may alternatively indicate the second network device to which the first target cell belongs, the second identification information may alternatively indicate the first network device to which the first source cell belongs, the third identification information may alternatively indicate the second network device to which the second target cell belongs, and the fourth identification information may alternatively indicate the first network device to which the second source cell belongs.

It may be understood that the first identification information and/or the second identification information may be explicitly indicated or implicitly indicated in the first request message. This is not limited in this embodiment of this application. When the first identification information and/or the second identification information are/is implicitly indicated, there is an association relationship between a cell identifier and an F1 interface identifier between the CU and the DU. The CU and the DU may determine a corresponding cell identifier based on the F1 interface identifier.

It may be understood that when the first network device and the second network device do not use the CU-DU split architecture, the first network device may send the first request message to the second network device without using the third network device, but directly send the first request message to the second network device. Correspondingly, the second network device may receive the first request message from the second network device without using the third network device, but directly receive the first request message from the second network device.

In still another implementation, the first request message may not need to be initiated by the first network device, but is directly initiated by the third network device, in other words, the first request message is sent by the third network device to the second network device.

In still another implementation, the first request message may be a request message at a granularity of a terminal device. For example, the first request message may further include one or more of the following information: identification information of the first terminal device; identification information of the second terminal device; indication information for requesting a first resource shared by the first terminal device and the second terminal device; indication information for requesting a first resource dedicated to the first terminal device; and indication information for requesting a first resource dedicated to the second terminal device. In this manner, if the first terminal device requires a low delay, the second network device may allocate a dedicated first resource to the first terminal device. Therefore, in the following S503, the first network device may quickly select, based on the first resource, a second resource used by the first terminal device to perform early synchronization, so that the first terminal device quickly completes early TA acquisition and performs switching without random access, to satisfy the low delay requirement.

In S502, the second network device may send a first response message (or referred to as a third message) to the first network device through the third network device, and correspondingly, the first network device may receive the first response message from the second network device through the third network device.

The first response message may indicate the first resource.

In an implementation, the first resource may be different from a third resource of the at least one candidate cell, and the third resource is used by a terminal device in the at least one candidate cell to perform uplink synchronization with the second network device. For example, if the first source cell is a cell 1, and the at least one candidate cell is a cell 2, when the second network device allocates a resource of the cell 2 to a terminal device in the cell 1 to enable the terminal device in the cell 1 to perform uplink synchronization with the cell 2, a resource allocated to the terminal device in the cell 1 is different from a resource allocated to a terminal device in the cell 2, so that access of the terminal device in the cell 2 to the cell 2 is not affected when the terminal device in the cell 1 performs uplink synchronization with the cell 2.

It may be understood that the first resource and the third resource may be random access preambles having different root sequences. For example, 64 random access preambles: a preamble a1, ..., and a preamble a64 are allocated to the terminal device in the cell 1, and 64 other random access preambles: a preamble b1, ..., and a preamble b64 are allocated to the terminal device in the cell 2. Alternatively, the first resource and the third resource may have different time-frequency positions for sending random access preambles. For example, a time-frequency position that is for sending a random access preamble and that is allocated to the terminal device in the cell 1 is a time-frequency position 1, and a time-frequency position that is for sending a random access preamble and that is allocated to the terminal device in the cell 2 is a time-frequency position 2. This is not limited in this embodiment of this application.

It may be understood that when the first network device and the second network device do not use the CU-DU split architecture, the second network device may send the first response message to the first network device directly without using the third network device, but directly send the first response message to the first network device. Correspondingly, the first network device may receive the first response message from the second network device without using the third network device, but directly receive the first response message from the second network device.

In S503, the first network device may determine the second resource from the first resource, send a first synchronization indication message (or referred to as a second message) to the first terminal device, and send a second synchronization indication message to the second terminal device. Correspondingly, the first terminal device may receive the first synchronization indication message from the first network device, and the second terminal device may receive the second synchronization indication message from the first network device.

The second resource may be used by the first terminal device to perform uplink synchronization with the second network device.

For example, information about the second resource may include one or more of the following information: identification information of a random access preamble sent by the first terminal device when the first terminal device performs uplink synchronization with the second network device (for example, identification information of the first random access preamble), information about a time-frequency position at which the first terminal device sends the random access preamble when the first terminal device performs uplink synchronization with the second network device (for example, information about a first time-frequency position), and information about a beam direction corresponding to the information about the time-frequency position at which the first terminal device sends the random access preamble when the first terminal device performs uplink synchronization with the second network device (for example, information about a first beam direction, where the first beam direction is used by the first terminal device to determine the first time-frequency position).

For example, the information about the first time-frequency position may include one or more of the following information: identification information of a random access channel occasion (RACH occasion, RO), information about a random access-radio network temporary identifier (random access-radio network temporary identifier, RA-RNTI), and indication information of a system frame number (system frame number, SFN), indicating a value of at least one bit of the system frame number.

The first synchronization indication message may indicate the first terminal device to perform uplink synchronization with the second network device.

For example, the first synchronization indication message may include one or more of the following information: the identification information of the first random access preamble and the information about the first time-frequency position; and the information about the first beam direction. In other words, the first synchronization indication message may include the information about the second resource.

The second synchronization indication message may indicate the second terminal device to perform uplink synchronization with the second network device.

For example, the second synchronization indication message may include one or more of the following information: identification information of the second random access preamble sent by the second terminal device when the second terminal device performs uplink synchronization with the second network device (for example, the identification information of the second random access preamble), information about a time-frequency position at which the second terminal device sends the random access preamble when the second terminal device performs uplink synchronization with the second network device (for example, information about a second time-frequency position), and information about a beam direction corresponding to the time-frequency position at which the second terminal device sends the random access preamble when the second terminal device performs uplink synchronization with the second network device (for example, information about a second beam direction, where the second beam direction is used by the second terminal device to determine the second time-frequency position).

Optionally, in S502 and S503, the first resource configured for the first terminal device and the second terminal device may be first sent by the second network device to the first network device through the third network device, and then the first network device determines the second resource from the first resource and sends the second resource to the first terminal device. Example 1 of the first resource configured for the first terminal device and the second terminal device is: a first resource provided by a candidate cell 2 for a source cell 1, and a first resource provided by a candidate cell 3 for the source cell 1. Example 2 of content of the first resource configured for the first terminal device and the second terminal device is: a first resource provided by a candidate cell 2 for the first network device, and a first resource provided by a candidate cell 3 for the first network device. It is considered that the first terminal device and the second terminal device may perform subsequent cell switching. For example, after switching from the source cell 1 to the candidate cell 2, the first terminal device and the second terminal device may further continue to switch from the candidate cell 2 to the candidate cell 3. Therefore, the first resource provided for the first terminal device and the second terminal device may further include a first resource provided by any candidate cell for another candidate cell, for example, a first resource provided by the candidate cell 2 for the candidate cell 3, and a first resource provided by the candidate cell 3 for the candidate cell 2. In this way, when subsequent cell switching is performed, the first resource does not need to be reconfigured for the first terminal device and the second terminal device. It may be understood that, to configure, for the first terminal device and the second terminal device, a first resource that is provided by any candidate cell for another candidate cell, the first network device, the second network device, and the third network device need to implement S501.

S402: The second network device sends a first message to the first network device, and the first network device receives the first message.

In this embodiment of this application, the second network device may send the first message to the first network device, and correspondingly, the first network device may receive the first message from the second network device. The first message may indicate the first TA, or the first message may indicate the second TA.

It may be understood that when the first network device and the second network device use the CU-DU split architecture, the second network device may send the first message to the first network device through the third network device, and correspondingly, the first network device may receive the first message from the second network device through the third network device. When the first network device and the second network device do not use the CU-DU split architecture, the second network device may directly send the first message to the first network device, and correspondingly, the first network device may directly receive the first message from the second network device.

When the first message indicates the first TA, in an implementation, the first message may include first information. The first information indicates that the first TA corresponds to the first terminal device. The first information may include the identification information of the first random access preamble and the information about the first time-frequency position. For example, the first message indicates a TA 1, and the first information in the first message may include a random access preamble 1, a random access channel occasion 1, a random access-radio network temporary identifier 1, and a system frame number 1.

In another implementation, the first information may further include the second identification information. The second identification information indicates the first source cell or the first network device.

For example, if the first source cell and the second source cell are different cells, for example, the first source cell is a cell 1, and the second source cell is a cell 2, the first information in the first message may include identification information of the cell 1, so that the first network device may determine, based on the identification information of the cell 1, that the first TA corresponds to the first terminal device.

In still another implementation, the first information may further include the first identification information. The first identification information indicates the first target cell or the second network device. It may be understood that when the first network device and the second network device use the CU-DU split architecture, in other words, the first network device and the second network device are the DUs and the third network device is the CU, the first identification information may be allocated by the third network device and notified to the second network device, or may be allocated by the second network device and notified to the third network device.

For example, if the first target cell and the second target cell are different cells, for example, as shown in FIG. 3f, source cells of a UE 1 and a UE 2 are both a cell 1, a target cell of the UE 1 is a cell 2, and a target cell of the UE 2 is a cell 3, the UE 1 and the UE 2 send two random access preambles to a DU 2 to which the cell 2 and the cell 3 belong, and the DU 2 obtains, through calculation based on the two random access preambles, a TA of the cell 2 and a TA of the cell 3, which are respectively a TA 1 and a TA 2. In this case, the DU 2 may send a first message to the DU 1. When the first message indicates the TA 1, first information in the first message may include identification information cell2 of the cell 2, so that the DU 1 can determine that the TA 1 corresponds to the UE 1.

In still another implementation, the first information may further include the identification information of the first terminal device. Alternatively, the first information may not include the identification information of the first random access preamble, the information about the first time-frequency position, the first identification information, or the second identification information, and include only the identification information of the first terminal device.

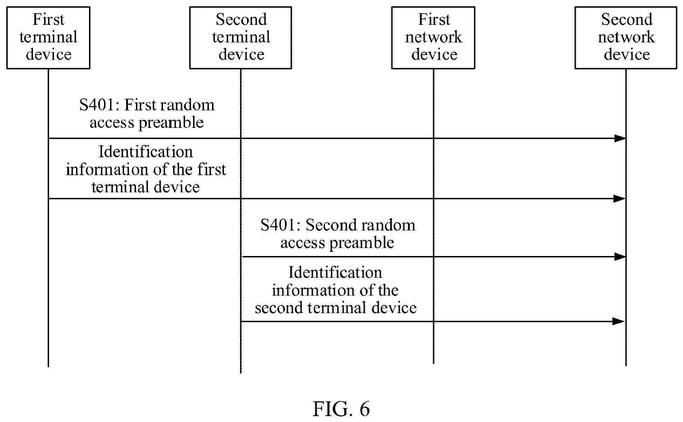

For example, refer to FIG. 6. After sending the first random access preamble to the second network device, the first terminal device may further send the identification information of the first terminal device to the second network device through a PUSCH, and correspondingly, the second network device may further receive the identification information of the first terminal device from the first terminal device, so that the first information in the first message sent by the second network device to the first network device may include the identification information of the first terminal device. Further, the first network device may determine, based on the identification information of the first terminal device, that the first TA corresponds to the first terminal device. For example, the identification information of the first terminal device may be carried in physical layer signaling (for example, PUSCH signaling), or in a MAC CE message or an RRC layer message. This is not limited in this embodiment of this application.

It may be understood that after receiving the first random access preamble from the first terminal device, the second network device may determine the identification information of the first random access preamble, the information about the first time-frequency position at which the first terminal device sends the first random access preamble, the second identification information, the first identification information, or the identification information of the first terminal device. In other words, after receiving the first random access preamble from the first terminal device, the first network device may determine the first information.

Similarly, when the first message indicates the second TA, in an implementation, the first message may include first information. The first information indicates that the second TA corresponds to the second terminal device. The first information may include the identification information of the second random access preamble and the information about the second time-frequency position. For example, the first message indicates a TA 2, and the first information in the first message may include a random access preamble 2, a random access channel occasion 2, a random access-radio network temporary identifier 2, and a system frame number 2.

In another implementation, the first information may further include the fourth identification information. The fourth identification information indicates the second source cell or the first network device.

For example, if the first source cell and the second source cell are different cells, for example, the first source cell is a cell 1, and the second source cell is a cell 2, the first information in the first message may include identification information of the cell 2, so that the first network device may determine, based on the identification information of the cell 2, that the second TA corresponds to the second terminal device.

In still another implementation, the first information may further include the third identification information. The third identification information indicates the second target cell or the second network device. It may be understood that when the first network device and the second network device use the CU-DU split architecture, in other words, the first network device and the second network device are the DUs and the third network device is the CU, the third identification information may be allocated by the third network device and notified to the second network device, or may be allocated by the second network device and notified to the third network device.

For example, if the first target cell and the second target cell are different cells, for example, as shown in FIG. 3f, source cells of a UE 1 and a UE 2 are both a cell 1, a target cell of the UE 1 is a cell 2, and a target cell of the UE 2 is a cell 3, the UE 1 and the UE 2 send two random access preambles to a DU 2 to which the cell 2 and the cell 3 belong, and the DU 2 obtains, through calculation based on the two random access preambles, a TA of the cell 2 and a TA of the cell 3, which are respectively a TA 1 and a TA 2. In this case, the DU 2 may send a first message to the DU 1. When the first message indicates the TA 2, first information in the first message may include identification information cell3 of the cell 3, so that the DU 1 can determine that the TA 2 corresponds to the UE 2.

In still another implementation, the first information may further include the identification information of the second terminal device. Alternatively, the first information may not include the identification information of the second random access preamble, the information about the second time-frequency position, the third identification information, or the fourth identification information, and include only the identification information of the second terminal device.

For example, refer to FIG. 6. After sending the second random access preamble to the second network device, the second terminal device may further send the identification information of the second terminal device to the second network device through a PUSCH, and correspondingly, the second network device may further receive the identification information of the second terminal device from the second terminal device, so that the first information in the first message sent by the second network device to the first network device may include the identification information of the second terminal device. Further, the first network device may determine, based on the identification information of the second terminal device, that the second TA corresponds to the second terminal device. For example, the identification information of the second terminal device may be carried in physical layer signaling (for example, PUSCH signaling), or in a MAC CE message or an RRC layer message. This is not limited in this embodiment of this application.

In still another implementation, in S503, after determining the second resource configured for the first terminal device from the first resource, the first network device may send a message to the second network device to indicate the information about the second resource. Optionally, the first network device may further send a message to the second network device to indicate the identification information of the first terminal device. The message may be forwarded by the third network device. After receiving the message indicating the information about the second resource, the second network device receives a random access preamble at a corresponding resource position, and after receiving the random access preamble and obtains a TA through calculation, the second network device sends the TA to the first network device, where the TA may be forwarded by the third network device. Optionally, when sending the TA, the second network device may further send the identification information of the first terminal device, so that the first network device can determine that the received TA corresponds to the first terminal device.

In still another implementation, in S503, the first network device may include identification information of the first target cell in the information that is about the second resource and that is indicated in the first synchronization indication message, and the first target cell is any one of at least one candidate cell configured for the first terminal device. For example, eight candidate cells are configured for the first terminal device, identifiers of the eight candidate cells are respectively A, B, C, D, E, F, G, and H, and the identifiers are recorded as cell identifiers on a terminal device side. In this case, the information that is about the second resource and that is indicated in the first synchronization indication message may include any one of the identifiers A to H. However, the first identification information indicated in the first information in S402 may be different from the identification information of the first target cell. For example, the identification information that is of the first target cell and that is indicated by the first identification information may be a physical cell identifier (physical cell identifier, PCI) or a cell global identifier (cell global identifier, CGI) of the first target cell, or another identifier that can indicate the first target cell. The identifier is recorded as a cell identifier on a network device side.

The first network device may further learn of the cell identifier on the terminal device side, the cell identifier on the network device side, and a correspondence between the cell identifier on the terminal device side and the cell identifier on the network device side. The foregoing information may be generated by the first network device. For example, the third network device notifies the first network device of the cell identifier on the network device side, and the first network device generates the correspondence between the cell identifier on the terminal device side and the cell identifier on the network device side. Alternatively, the foregoing information may be generated by the third network device. For example, the third network device notifies the first network device of the cell identifier on the terminal device side, the cell identifier on the network device side, and the correspondence between the cell identifier on the terminal device side and the cell identifier on the network device side. For example, the notification process is complete in S502.

S403: The first network device sends the first TA to the first terminal device based on the first information, or the first network device sends the second TA to the second terminal device based on the first information.

In this embodiment of this application, when the first message indicates the first TA, in S503, the first network device determines, from the first resource, the second resource provided for the first terminal device, and indicates the information about the second resource in the first synchronization indication message sent to the first terminal device, so that the first terminal device performs uplink synchronization with the second network device by using the second resource. Therefore, the first network device may determine whether the first information included in the first message matches the information about the second resource; and if the first information included in the first message matches the information about the second resource, the first network device determines that the first TA corresponds to the first terminal device, and sends the first TA to the first terminal device.

For example, the first TA may be carried in a switch command or a downlink message. The switch command may indicate that the first terminal device is configured with a cell managed by the second network device as a candidate cell. The downlink message may be a random access response message or a MAC CE message. This is not limited in this embodiment of this application.

Optionally, the switch command or the downlink message may further include an uplink grant of the first source cell, so that after receiving the first TA, the first terminal device may send an uplink message to the first network device by using the uplink grant of the first source cell. The uplink message indicates that the first terminal device has successfully received the first TA, in other words, the first terminal device has successfully completed uplink synchronization with the second network device.

Similarly, when the first message indicates the second TA, the first network device may determine whether the first information included in the first message matches information about a resource provided for the second terminal device. If the first information included in the first message matches the information about the resource provided for the second terminal device, the first network device determines that the second TA corresponds to the second terminal device, and sends the second TA to the second terminal device.

Optionally, after the first terminal device or the second terminal device completes one time of cell switching, the first terminal device or the second terminal device may perform subsequent cell switching. Because the first network device knows the first TA of the first target cell corresponding to the first terminal device or the second TA of the second target cell corresponding to the second terminal device, after the first terminal device or the second terminal device switches from the first network device to the second network device, the first network device may send, to the second network device, a message indicating the identification information of the first terminal device, the first identification information, and the first TA; or send, to the second network device, a message indicating the identification information of the second terminal device, the third identification information, and the second TA, so that the second network device learns of the TA of the first target cell corresponding to the first terminal device or the TA of the second target cell corresponding to the second terminal device, to help the first terminal device or the second terminal device continue to initiate switching without random access. It may be understood that the message sent by the first network device to the second network device may be forwarded by using the third network device.

In an implementation, the first network device may indicate a TA (for example, step 6 in FIG. 3b) to a terminal device (for example, the first terminal device or the second terminal device) in a switch command. When the first network device successfully obtains a TA of a to-be-switched terminal device, the first network device may explicitly include the TA in the switch command, and the terminal device performs, by using the TA, cell switching without random access. When the first network device does not obtain a TA of a to-be-switched terminal device, the first network device may indicate a special value in a TA field of the switch command, where the special value may indicate that the TA is not obtained, indicate that the TA is invalid, or indicate the to-be-switched terminal device to perform switching without random access. When the TA field has m binary bits, the first network device may set all the m binary bits to 1, to indicate that the TA field is of a special value, and further indicate that the TA is not obtained, the TA is invalid, or indicate the terminal device to perform random access-based switching. When m is equal to 12, the first network device may set the TA field to 111111111111 (namely, 4095 in decimal notation) as a special value. It may be understood that the special value needs to be set to an invalid TA value. When a valid TA value is in an interval of a to b, a value that is not in the interval of a to b may be set as a special value, for example, b+1. A specific value is not limited in this embodiment of this application. According to this solution, a format design of the switch command can be applied to a switching scenario without random access and a switching scenario based on random access, and the terminal device can quickly obtain, through parsing, content indicated by the switch command.

In another implementation, the first network device indicates a TA to a terminal device in a downlink message before a switch command (for example, step 5b in FIG. 3c). Because a to-be-switched terminal device may send random access preambles to a plurality of candidate cells in a short term to obtain TAs in advance, the downlink message in step 5b may carry the TA and identification information indicating a corresponding candidate cell.

In still another implementation, the first network device may further indicate a beam direction of a target cell in the switch command. For example, a transmission configuration indicator (transmission configuration indicator, TCI) state (State) indicates a beam direction that needs to be used by the terminal device. In a switching process without random access, the terminal device sends an uplink message to the target cell by using the indicated beam direction and the TA. There are two types of TCI states: a joint (Joint) TCI state and a separate (Separate) TCI state. The joint TCI state indicates uplink (UL) and downlink (DL) beam directions, the separate UL TCI state indicates an uplink beam direction, and the separate DL TCI state indicates a downlink beam direction. When the first network device needs to indicate, in the switch command, a beam direction that needs to be used by the terminal device in the target cell, the first network device needs to know a type of a TCI state configured by the second network device for the terminal device. Therefore, in step 1 in FIG. 3a, FIG. 3b, or FIG. 3c, the candidate DU (or referred to as the target DU) notifies the source DU of a type of a TCI state configured for the candidate cell (or referred to as the target cell), for example, whether the type is a joint type or a separate type.

### Solution 2

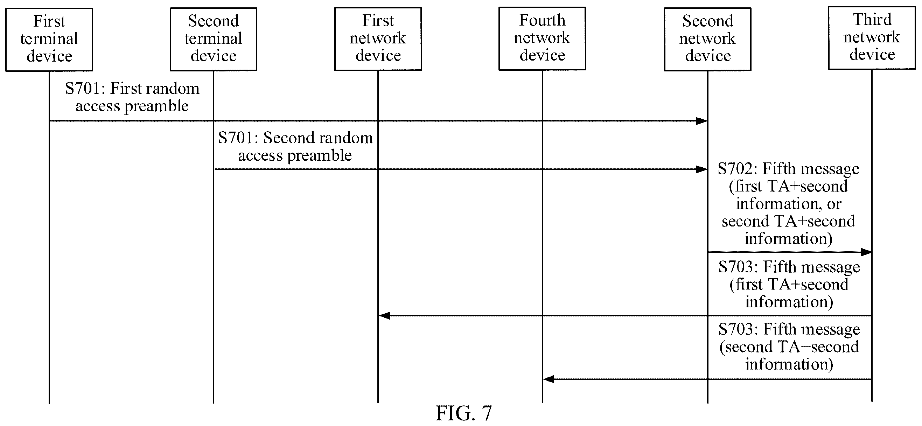

FIG. 7 is a schematic flowchart of another timing advance acquisition method according to an embodiment of this application. The method may be applied to, but is not limited to, the communication system shown in FIG. 1. The method may be applied to, but is not limited to, the scenario 2. In the scenario 2, the first target cell and the second target cell may be a same cell or different cells. This is not limited in this embodiment of this application. The method includes the following steps.

S701: A first terminal device sends a first random access preamble to a second network device, and correspondingly, the second network device receives the first random access preamble from the first terminal device. A second terminal device sends a second random access preamble to the second network device, and correspondingly, the second network device receives the second random access preamble from the second terminal device.

In this embodiment of this application, the first terminal device may send the first random access preamble to the second network device, and correspondingly, the second network device may receive the first random access preamble from the first terminal device. Similarly, the second terminal device may also send the second random access preamble to the second network device, and correspondingly, the second network device may also receive the second random access preamble from the second terminal device. It may be understood that the first random access preamble and the second random access preamble may be a same random access preamble or different random access preambles. This is not limited in this embodiment of this application.

The second network device may further obtain a first TA through calculation based on the first random access preamble from the first terminal device, and obtain a second TA through calculation based on the second random access preamble from the second terminal device.

For example, when a first target cell and a second target cell are a same cell, as shown in FIG. 3e, a source cell of a UE 1 is a cell 1, and a source cell of a UE 2 is a cell 2. Target cells of the UE 1 and the UE 2 are both a cell 3. A DU to which the cell 1 belongs is a DU 1, in other words, a source DU of the UE 1 is the DU 1. A DU to which the cell 2 belongs is a DU 2, in other words, a source DU of the UE 2 is the DU 2. A DU to which the cell 3 belongs is a DU 3, in other words, target DUs of the UE 1 and the UE 2 are both the DU 3. The UE 1 and the UE 2 send two random access preambles to the DU 2. The DU 3 obtains two different TAs, which are respectively a TA 1 and a TA 2, of the cell 3 through calculation based on the two random access preambles.

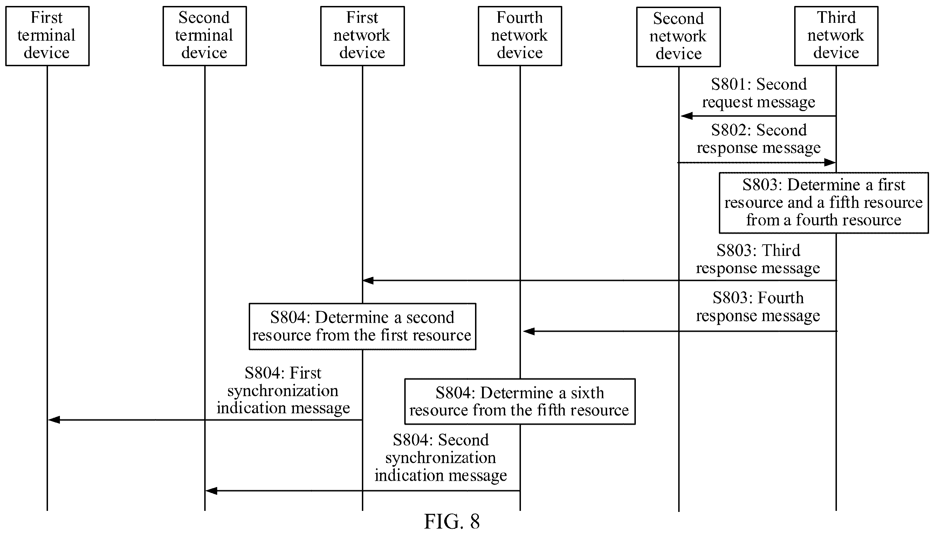

Based on an implementation process in FIG. 7, steps shown in FIG. 8 may be further performed in this application.

In S801, a third network device may send a second request message (or referred to as a seventh message) to the second network device, and correspondingly, the second network device may receive the second request message from the third network device.

The second request message may be used to request a fourth resource of at least one candidate cell. The fourth resource may be used by a terminal device (for example, the first terminal device) in a first source cell and a terminal device (for example, the second terminal device) in a second source cell to perform uplink synchronization with the second network device. Optionally, the fourth resource may alternatively be used by a terminal device (for example, the first terminal device) served by a first network device and a terminal device (for example, the second network device) served by a fourth network device to perform uplink synchronization with the second network device.

For example, information about the fourth resource may include one or more of the following information: identification information of random access preambles sent by the terminal devices in the first source cell and the second source cell when the terminal devices perform uplink synchronization with the second network device, information about a time-frequency position at which the terminal devices in the first source cell and the second source cell send the random access preamble when the terminal devices perform uplink synchronization with the second network device, and information about a beam direction corresponding to the information about the time-frequency position at which the terminal devices in the first source cell and the second source cell send the random access preamble when the terminal devices perform uplink synchronization with the second network device. It may be understood that the information about the fourth resource at a granularity of the first source cell and the second source cell may alternatively be at a granularity of the first network device and the fourth network device. To be specific, the information about the fourth resource may include one or more of the following information: identification information of a random access preamble sent by the terminal devices served by the first network device and the fourth network device when the terminal devices perform uplink synchronization with the second network device, information about a time-frequency position at which the terminal devices served by the first network device and the fourth network device send the random access preamble when the terminal devices perform uplink synchronization with the second network device, and information about a beam direction corresponding to the information about the time-frequency position at which the terminal devices served by the first network device and the fourth network device send the random access preamble when the terminal devices perform uplink synchronization with the second network device. In this embodiment of this application, a candidate network device (or referred to as a target network device) (for example, the second network device) may allocate fourth resources to a plurality of source cells (for example, the first source cell and the second source cell), or may allocate fourth resources to a plurality of source network devices (for example, the first network device and the fourth network device). One allocated fourth resource may be provided by each candidate cell.

In an implementation, the second request message may include information about a quantity of requested fourth resources. The quantity of requested fourth resources may be obtained by the third network device based on a quantity of terminal devices in the first source cell and the second source cell or a quantity of terminal devices that are in the first source cell and the second source cell and that are configured with a cell managed by the second network device as a candidate cell. For example, if the first source cell is a cell 1, the second source cell is a cell 2, the cell managed by the second network device is a cell 3, terminal devices in the cell 1 and the cell 2 include a terminal device 1, a terminal device 2, and a terminal device 3, and terminal devices that are in the cell 1 and the cell 2 and that access the cell 3 include the terminal device 1 and the terminal device 2, the third network device may obtain, through calculation based on a quantity of terminal devices in the cell 1 and the cell 2 or a quantity of terminal devices that are in the cell 1 and the cell 2 and that are configured with the cell 3 as a candidate cell, a quantity of resources used by the terminal devices in the cell 1 and the cell 2 or the terminal devices that are in the cell 1 and the cell 2 and that are configured with the cell 3 as the candidate cell to perform uplink synchronization with the second network device, and indicate, in the second request message sent to the second network device, information about the quantity of resources used by the terminal devices in the cell 1 and the cell 2 or the terminal devices that are in the cell 1 and the cell 2 and that are configured with the cell 3 as the candidate cell to perform uplink synchronization with the second network device. For example, the quantity is a large quantity, a medium quantity, or a small quantity.

In another implementation, the second request message may further include one or more of the following information: First identification information indicating the first target cell, second identification information indicating the first source cell, third identification information indicating the second target cell, and fourth identification information indicating the second source cell. For example, if the first source cell is a cell 1, the second source cell is a cell 2, and the first target cell and the second target cell are a cell 3, the third network device may indicate identification information of the cell 1, identification information of the cell 2, and/or identification information of the cell 3 in the second request message sent to the second network device, and the second network device may determine, based on the identification information of the cell 1, the identification information of the cell 2, and the identification information of the cell 3, that the second request message is used to request to allocate a resource of the cell 3 to terminal devices in the cell 1 and the cell 2, so that the terminal devices in the cell 1 and the cell 2 perform uplink synchronization with the cell 3. It may be understood that the first identification information may alternatively indicate the second network device to which the first target cell belongs, the second identification information may alternatively indicate the first network device to which the first source cell belongs, the third identification information may alternatively indicate the second network device to which the second target cell belongs, and the fourth identification information may alternatively indicate the fourth network device to which the second source cell belongs.

It may be understood that the first identification information, the second identification information, the third identification information, and/or the fourth identification information may be explicitly indicated or implicitly indicated in the second request message. This is not limited in this embodiment of this application. When the first identification information, the second identification information, the third identification information, and/or the fourth identification information are/is implicitly indicated, there is an association relationship between a cell identifier and an F1 interface identifier between a CU and a DU. The CU and the DU may determine a corresponding cell identifier based on the F1 interface identifier.

In still another implementation, the second request message may be a request message at a granularity of a terminal device. For example, the second request message may further include one or more of the following information: identification information of the first terminal device; identification information of the second terminal device; indication information for requesting a fourth resource shared by the first terminal device and the second terminal device; indication information for requesting a fourth resource dedicated to the first terminal device; and indication information for requesting a fourth resource dedicated to the second terminal device. In this manner, if the first terminal device requires a low delay, the second network device may allocate a dedicated fourth resource to the first terminal device. Therefore, in the following S804, the first network device may quickly select, based on a first resource determined in the fourth resource, a second resource used by the first terminal device to perform early synchronization, so that the first terminal device quickly completes early TA acquisition and performs switching without random access, to satisfy the low delay requirement.

In S802, the second network device may send a second response message (or referred to as a sixth message) to the third network device, and correspondingly, the third network device may receive the second response message from the second network device.

The second response message may indicate the fourth resource.

In an implementation, the fourth resource may be different from a third resource of the at least one candidate cell, and the third resource is used by a terminal device in the at least one candidate cell to perform uplink synchronization with the second network device. For example, if the first source cell is a cell 1, the second source cell is a cell 2, and the at least one candidate cell is a cell 3, when the second network device allocates a resource of the cell 3 to terminal devices in the cell 1 and the cell 2 to enable the terminal devices in the cell 1 and the cell 2 to perform uplink synchronization with the cell 3, a resource allocated to the terminal devices in the cell 1 and the cell 2 is different from a resource allocated to a terminal device in the cell 3, so that access of the terminal device in the cell 3 to the cell 3 is not affected when the terminal devices in the cell 1 and the cell 2 performs uplink synchronization with the cell 3.

It may be understood that the fourth resource and the third resource may be random access preambles having different root sequences. For example, 64 random access preambles: a preamble a1, ..., and a preamble a64 are allocated to the terminal devices in the cell 1 and the cell 2, and 64 other random access preambles: a preamble b1, ..., and a preamble b64 are allocated to the terminal device in the cell 3. Alternatively, the fourth resource and the third resource may have different time-frequency positions for sending random access preambles. For example, a time-frequency position that is for sending a random access preamble and that is allocated to the terminal devices in the cell 1 and the cell 2 is a time-frequency position 1, and a time-frequency position that is for sending a random access preamble and that is allocated to the terminal device in the cell 3 is a time-frequency position 2. This is not limited in this embodiment of this application.

In S803, the third network device may determine the first resource and a fifth resource from the fourth resource, send a third response message (or referred to as an eighth message) to the first network device, and send a fourth response message to the fourth network device. Correspondingly, the first network device may receive the third response message from the third network device, and the fourth network device may receive the fourth response message from the third network device.

The first resource may be used by the terminal device in the first source cell to perform uplink synchronization with the second network device. The fifth resource is used by the terminal device in the second source cell to perform uplink synchronization with the second network device. The third response message may indicate the first resource. The fourth response message may indicate the fifth resource. Optionally, the first resource may alternatively be used by the terminal device (for example, the first terminal device) served by the first network device to perform uplink synchronization with the second network device. The fifth resource may alternatively be used by the terminal device (for example, the second terminal device) served by the fourth network device to perform uplink synchronization with the second network device.

For example, information about the first resource may include one or more of the following information: identification information of a random access preamble sent by the terminal device in the first source cell when the terminal device performs uplink synchronization with the second network device (for example, identification information of the first random access preamble), information about a time-frequency position at which the terminal device in the first source cell sends the random access preamble when the terminal device performs uplink synchronization with the second network device (for example, information about a first time-frequency position), and information about a beam direction corresponding to the information about the time-frequency position at which the terminal device in the first source cell sends the random access preamble when the terminal device performs uplink synchronization with the second network device (for example, information about a first beam direction, where the first beam direction is used by the first terminal device to determine the first time-frequency position). It may be understood that the information about the first resource at a granularity of the first source cell may alternatively be at a granularity of the first network device. To be specific, the information about the first resource may include one or more of the following information: identification information of a random access preamble sent by the terminal device served by the first network device when the terminal device performs uplink synchronization with the second network device, information about a time-frequency position at which the terminal device served by the first network device sends the random access preamble when the terminal device performs uplink synchronization with the second network device, and information about a beam direction corresponding to the information about the time-frequency position at which the terminal device served by the first network device sends the random access preamble when the terminal device performs uplink synchronization with the second network device.

For example, the information about the first time-frequency position may include one or more of the following information: identification information of a random access channel occasion, information about a random access-radio network temporary identifier, or indication information of a system frame number, indicating a value of at least one bit of the system frame number.

For example, information about the fifth resource may include one or more of the following information: identification information of a random access preamble sent by the terminal device in the second source cell when the terminal device performs uplink synchronization with the second network device (for example, identification information of the second random access preamble), information about a time-frequency position at which the terminal device in the second source cell sends the random access preamble when the terminal device performs uplink synchronization with the second network device (for example, information about a second time-frequency position), and information about a beam direction corresponding to the information about the time-frequency position at which the terminal device in the first source cell sends the random access preamble when the terminal device performs uplink synchronization with the second network device (for example, information about a second beam direction, where the second beam direction is used by the second terminal device to determine the second time-frequency position). It may be understood that the information about the fifth resource at a granularity of the second source cell may alternatively be at a granularity of the fourth network device. To be specific, the information about the fifth resource may include one or more of the following information: identification information of a random access preamble sent by the terminal device served by the fourth network device when the terminal device performs uplink synchronization with the second network device, information about a time-frequency position at which the terminal device served by the fourth network device sends the random access preamble when the terminal device performs uplink synchronization with the second network device, and information about a beam direction corresponding to the information about the time-frequency position at which the terminal device served by the fourth network device sends the random access preamble when the terminal device performs uplink synchronization with the second network device.

In an implementation, the first resource may be different from the fifth resource. It may be understood that the first resource and the fifth resource may be random access preambles having different root sequences, or the first resource and the fifth resource may have different time-frequency positions for sending random access preambles. This is not limited in this embodiment of this application.

In an implementation, the third network device may obtain a quantity of first resources based on a quantity of terminal devices in the first source cell or a quantity of terminal devices that are in the first source cell and that are configured with a cell managed by the second network device as a candidate cell, and obtain a quantity of fifth resources based on a quantity of terminal devices in the second source cell or a quantity of terminal devices that are in the second source cell and that are configured with a cell managed by the second network device as a candidate cell.

It may be understood that the third network device may divide the fourth resource into the first resource and the fifth resource at a granularity of a cell, or may divide the fourth resource into the first resource and the fifth resource at a granularity of a bandwidth part (bandwidth part, BWP). For example, the first resource may be a resource corresponding to a first BWP of the at least one candidate cell, and the fifth resource may be a resource corresponding to a second BWP of the at least one candidate cell. This is not limited in this embodiment of this application.

In S804, the first network device may determine the second resource from the first resource and send a first synchronization indication message to the first terminal device, and correspondingly, the first terminal device may receive the first synchronization indication message from the first network device; and the fourth network device may determine a sixth resource from the fifth resource and send a second synchronization indication message to the second terminal device, and correspondingly, the second terminal device may receive the second synchronization indication message from the fourth network device.

For related descriptions of "the first network device determines the second resource from the first resource and sends a first synchronization indication message to the first terminal device, and correspondingly, the first terminal device receives the first synchronization indication message from the first network device; and the fourth network device sends a second synchronization indication message to the second terminal device, and correspondingly, the second terminal device may receive the second synchronization indication message from the fourth network device" in S804, refer to the descriptions of S503. Details are not described herein again.

The sixth resource may be used by the second terminal device to perform uplink synchronization with the second network device.

For example, information about the sixth resource may include one or more of the following information: identification information of a random access preamble sent by the second terminal device when the second terminal device performs uplink synchronization with the second network device (for example, the identification information of the second random access preamble), information about a time-frequency position at which the second terminal device sends the random access preamble when the second terminal device performs uplink synchronization with the second network device (for example, the information about the second time-frequency position), and information about a beam direction corresponding to the information about the time-frequency position at which the first terminal device sends the random access preamble when the first terminal device performs uplink synchronization with the second network device (for example, the information about the second beam direction, where the second beam direction is used by the second terminal device to determine the second time-frequency position). In other words, the second indication information may include the information about the sixth resource.

Optionally, in S802, S803, and S804, the fourth resource configured for the first terminal device and the second terminal device may be first sent by the second network device to the third network device, then the third network device determines the first resource from the first resource and sends the first resource to the first network device, and determines the fifth resource from the first resource and sends the fifth resource to the fourth network device, then the first network device determines the second resource from the first resource and sends the second resource to the first terminal device, and the fourth network device determines the sixth resource from the fifth resource and sends the sixth resource to the second terminal device. Example 1 of the fourth resource configured for the first terminal device and the second terminal device is: fourth resources provided by a candidate cell 2 for a source cell 1 and a source cell 2, and fourth resources provided by a candidate cell 3 for the source cell 1 and the source cell 2. Example 2 of content of the fourth resource configured for the first terminal device and the second terminal device is: fourth resources provided by a candidate cell 2 for the first network device and the fourth network device, and fourth resources provided by a candidate cell 3 for the first network device and the fourth network device. It is considered that the first terminal device and the second terminal device may perform subsequent cell switching. For example, after switching from the source cell 1 to the candidate cell 2 and switching from the source cell 2 to the candidate cell 2, the first terminal device and the second terminal device may further continue to switch from the candidate cell 2 to the candidate cell 3 and switch from the candidate cell 2 to the candidate cell 4. Therefore, the fourth resource provided for the first terminal device and the second terminal device may further include a fourth resource provided by any candidate cell for another candidate cell, for example, fourth resources provided by the candidate cell 2 for the candidate cell 3 and the candidate cell 4. In this way, when subsequent cell switching is performed, the fourth resource does not need to be reconfigured for the first terminal device and the second terminal device. It may be understood that, to configure, for the first terminal device and the second terminal device, a fourth resource that is provided by any candidate cell for another candidate cell, the second network device and the third network device need to implement S801.

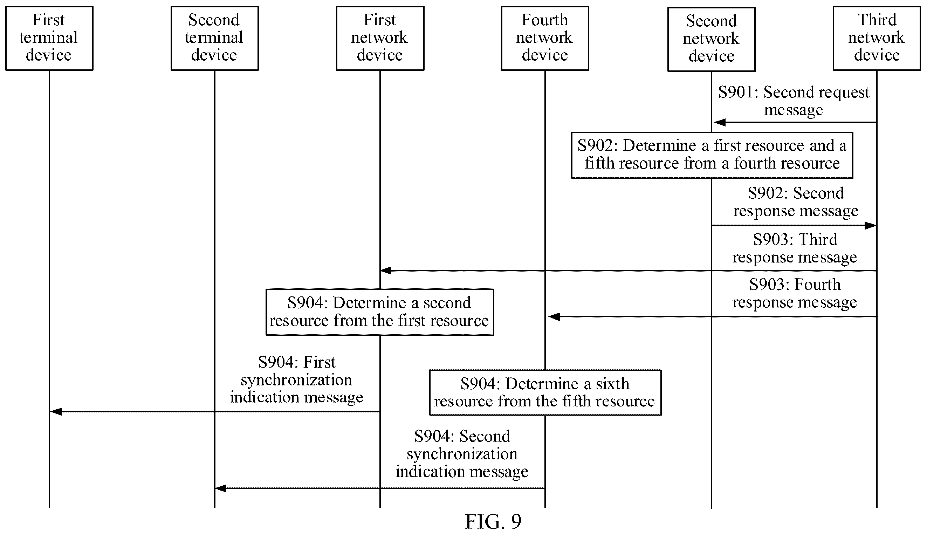

Based on the implementation process in FIG. 7, steps shown in FIG. 9 may be further performed in this application.

In S901, a third network device may send a second request message to the second network device, and correspondingly, the second network device may receive the second request message from the third network device.

For S901, refer to the descriptions of S801. Details are not described herein again.

In S902, the second network device may determine a first resource and a fifth resource from a fourth resource and send a second response message to the third network device, and correspondingly, the third network device receives the second response message from the second network device.

For related descriptions of "the second network device determines a first resource and a fifth resource from a fourth resource" in S902, refer to the descriptions of S803. For related descriptions of "the second network device sends a second response message to the third network device, and correspondingly, the third network device receives the second response message from the second network device" in S902, refer to the descriptions of S802. Details are not described herein again.

In S903, the third network device may send a third response message to the first network device and send a fourth response message to a fourth network device, and correspondingly, the first network device may receive the third response message from the third network device, and the fourth network device may receive the fourth response message from the third network device.

For S903, refer to the descriptions of S803. Details are not described herein again.

In S904, the first network device may determine a second resource from the first resource and send a first synchronization indication message to the first terminal device, and correspondingly, the first terminal device may receive the first synchronization indication message from the first network device; and the fourth network device may determine a sixth resource from the fifth resource and send a second synchronization indication message to the second terminal device, and correspondingly, the second terminal device may receive the second synchronization indication message from the fourth network device.

For S904, refer to the descriptions of S804. Details are not described herein again.

S702: The second network device sends a fifth message to the third network device, and correspondingly, the third network device receives the fifth message from the second network device.

In this embodiment of this application, the second network device may send the fifth message to the third network device, and correspondingly, the third network device may receive the fifth message from the second network device. The fifth message may indicate the first TA, or the fifth message may indicate the second TA.

When the fifth message indicates the first TA, in an implementation, the fifth message may include second information. The second information indicates that the first TA corresponds to the first network device to which the first source cell of the first terminal device belongs. The second information may include one or more of the following information: the identification information of the first random access preamble and the information about the first time-frequency position; and the second identification information indicating the first source cell or the first network device. For example, the fifth message indicates a TA 1, and the second information in the fifth message may include a random access preamble 1, a random access channel occasion 1, a random access-radio network temporary identifier 1, a system frame number 1, and a cell 1.

It may be understood that the second identification information is obtained by the second network device based on the first random access preamble and the first resource. For example, after receiving the first random access preamble from the first terminal device, the second network device may determine whether the identification information of the first random access preamble exists in the information about the first resource. If the identification information of the first random access preamble exists in the information about the first resource, because the first resource is a resource used by the terminal device in the first source cell or served by the first network device to perform uplink synchronization with the second network device, it may be determined that a network device to which a source cell of a terminal device corresponding to the first TA obtained through calculation based on the first random access preamble belongs is a network device to which the first source cell belongs, that is, the first TA corresponds to the first network device. Therefore, the second network device may include the second identification information in the second information in the fifth message sent to the third network device, so that the third network device can determine, based on the second identification information, that the first TA corresponds to the first network device, and send the fifth message to the first network device.

In another implementation, because the third network device may divide the fourth resource into the first resource and the fifth resource at a granularity of a cell, in other words, the first resource may be the resource corresponding to the first BWP of the at least one candidate cell, and the fifth resource may be the resource corresponding to the second BWP of the at least one candidate cell, the second information may further include identification information of the first BWP.

Similarly, when the fifth message indicates the second TA, in an implementation, the fifth message may include second information. The second information indicates that the second TA corresponds to the fourth network device to which the second source cell of the second terminal device belongs. The second information may include one or more of the following information: the identification information of the second random access preamble and the information about the second time-frequency position; and the fourth identification information indicating the second source cell or the fourth network device. For example, the fifth message indicates a TA 2, and the second information in the fifth message may include a random access preamble 2, a random access channel occasion 2, a random access-radio network temporary identifier 2, a system frame number 2, and a cell 2.

It may be understood that the fourth identification information is obtained by the second network device based on the second random access preamble and the fifth resource. For example, after receiving the second random access preamble from the second terminal device, the second network device may determine whether the identification information of the second random access preamble exists in the fifth resource. If the identification information of the second random access preamble exists in the information about the fifth resource, because the fifth resource is a resource used by the terminal device in the second source cell or served by the fourth network device to perform uplink synchronization with the second network device, it may be determined that a network device to which a source cell of a terminal device corresponding to the second TA obtained through calculation based on the second random access preamble belongs is a network device to which the second source cell belongs, that is, the second TA corresponds to the fourth network device. Therefore, the second network device may include the fourth identification information in the second information in the fifth message sent to the third network device, so that the third network device can determine, based on the fourth identification information, that the second TA corresponds to the fourth network device, and send the fifth message to the fourth network device.

S703: The third network device sends the fifth message to the first network device or the fourth network device based on the second information, and correspondingly, the first network device or the fourth network device receives the fifth message from the third network device.

In this embodiment of this application, when the fifth message indicates the first TA, if the second information includes the identification information of the first random access preamble and the information about the first time-frequency position, the third network device may determine whether the identification information of the first random access preamble and the information about the first time-frequency position exist in the information about the first resource. If the identification information of the first random access preamble and the information about the first time-frequency position exist in the information about the first resource, because the first resource is a resource used by the terminal device in the first source cell to perform uplink synchronization with the second network device, the third network device may determine, based on the identification information of the first random access preamble and the information about the first time-frequency position, that the first TA indicated by the fifth message corresponds to the first network device to which the first source cell belongs, and send the fifth message to the first network device.

If the second information includes the second identification information, the third network device may determine, based on the second identification information, that the first TA indicated by the fifth message corresponds to the first network device to which the first source cell belongs, and send the fifth message to the first network device.

Similarly, when the fifth message indicates the second TA, if the second information includes the identification information of the second random access preamble and the information about the second time-frequency position, the third network device may determine whether the identification information of the second random access preamble and the information about the second time-frequency position exist in the information about the fifth resource. If the identification information of the second random access preamble and the information about the second time-frequency position exist in the information about the fifth resource, because the fifth resource is a resource used by the terminal device in the second source cell to perform uplink synchronization with the second network device, the third network device may determine, based on the identification information of the second random access preamble and the information about the second time-frequency position, that the second TA indicated by the fifth message corresponds to the fourth network device to which the second source cell belongs, and send the fifth message to the fourth network device.

If the second information includes the fourth identification information, the third network device may determine, based on the fourth identification information, that the second TA indicated by the fifth message corresponds to the fourth network device to which the second source cell belongs, and send the fifth message to the fourth network device.

### Solution 3

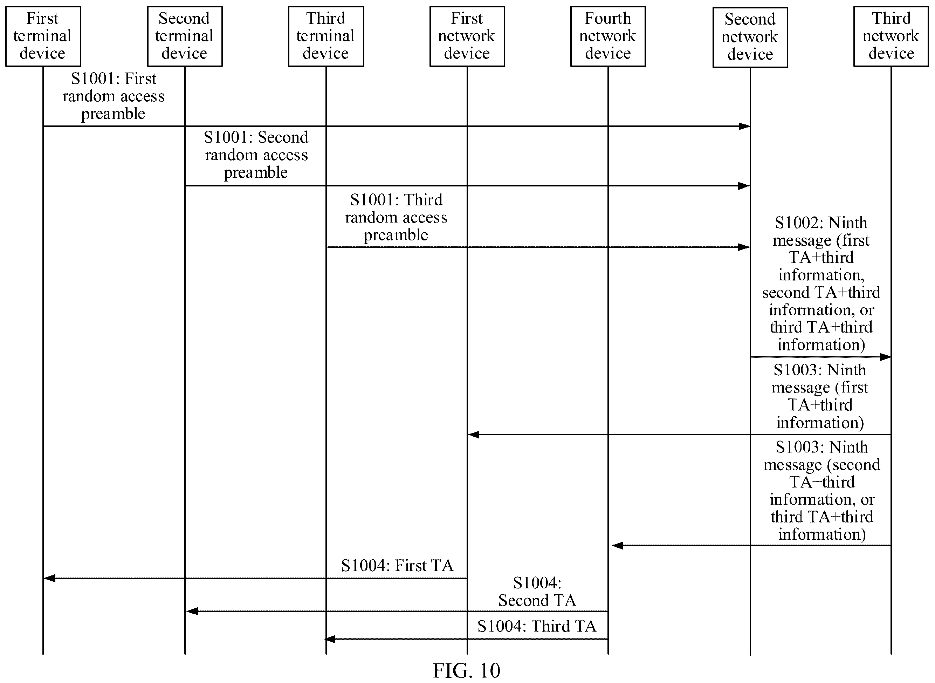

FIG. 10 is a schematic flowchart of still another timing advance acquisition method according to an embodiment of this application. The method may be applied to, but is not limited to, the communication system shown in FIG. 1. The method may be applied to, but is not limited to, the scenario 3. In the scenario 3, the first source cell and the third source cell may be a same cell or different cells, and the first target cell, the second target cell, and the third target cell may be a same cell or different cells. This is not limited in this embodiment of this application. For ease of description, in this embodiment of this application, an example in which the second source cell and the third source cell are a same cell is used. The second source cell and the third source cell are collectively referred to as a second source cell below. The method includes the following steps.

S1001: A first terminal device sends a first random access preamble to a second network device, and correspondingly, the second network device receives the first random access preamble from the first terminal device. A second terminal device sends a second random access preamble to the second network device, and correspondingly, the second network device receives the second random access preamble from the second terminal device. A third terminal device sends a third random access preamble to the second network device, and correspondingly, the second network device receives the third random access preamble from the third terminal device.

In this embodiment of this application, the first terminal device may send the first random access preamble to the second network device, and correspondingly, the second network device may receive the first random access preamble from the first terminal device. Similarly, the second terminal device may also send the second random access preamble to the second network device, and correspondingly, the second network device may also receive the second random access preamble from the second terminal device. The third terminal device may also send the third random access preamble to the second network device, and correspondingly, the second network device may also receive the third random access preamble from the third terminal device. It may be understood that the first random access preamble, the second random access preamble, and the third random access preamble may be a same random access preamble or different random access preambles. This is not limited in this embodiment of this application.

The second network device may further obtain a first TA through calculation based on the first random access preamble from the first terminal device, obtain a second TA through calculation based on the second random access preamble from the second terminal device, and obtain a third TA through calculation based on the third random access preamble from the third terminal device.

For example, refer to FIG. 3g. A source cell of a UE 1 is a cell 1, and source cells of a UE 2 and a UE 3 are a cell 2. Target cells of the UE 1, the UE 2, and the UE 3 are all a cell 3. A DU to which the cell 1 belongs is a DU 1, in other words, a source DU of the UE 1 is the DU 1. A DU to which the cell 2 belongs is a DU 2, in other words, source DUs of the UE 2 and the UE 3 are the DU 2. A DU to which the cell 3 belongs is a DU 3, in other words, target DUs of the UE 1, the UE 2, and the UE 3 are the DU 3. The UE 1, the UE 2, and the UE 3 send three random access preambles to the DU 2. Random access preambles sent by the UE 1 and the UE 2 are different, and random access preambles sent by the UE 2 and the UE 3 are the same. The DU 3 obtains three different TAs, which are respectively a TA 1, a TA 2, and a TA 3, of the cell 3 through calculation based on the three random access preambles.

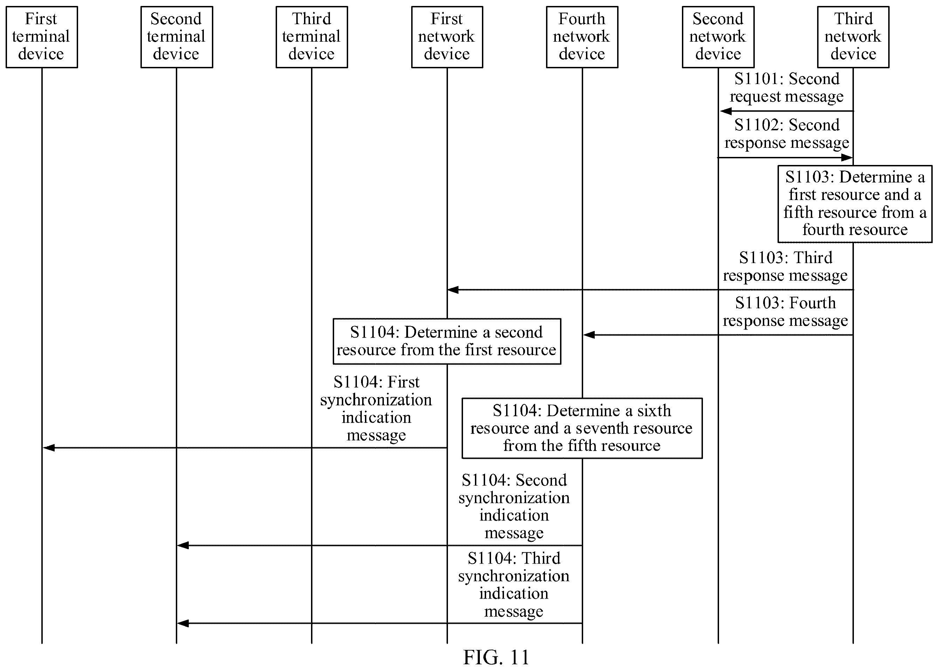

Based on an implementation process in FIG. 10, steps shown in FIG. 11 may be further performed in this application.

In S1101, a third network device may send a second request message to the second network device, and correspondingly, the second network device may receive the second request message from the third network device.

For S1101, refer to the descriptions of S801. Details are not described herein again.

In S1102, the second network device may send a second response message to the third network device, and correspondingly, the third network device may receive the second response message from the second network device.

For S1102, refer to the descriptions of S802. Details are not described herein again.

In S1103, the third network device may determine a first resource and a fifth resource from a fourth resource, send a third response message to the first network device, and send a fourth response message to the fourth network device. Correspondingly, the first network device may receive the third response message from the third network device, and the fourth network device may receive the fourth response message from the third network device.

For S1103, refer to the descriptions of S803. Details are not described herein again.

In S1104, the first network device may determine a second resource from the first resource and send a first synchronization indication message to the first terminal device, and correspondingly, the first terminal device may receive the first synchronization indication message from the first network device; and the fourth network device may determine a sixth resource and a seventh resource from the fifth resource, send a second synchronization indication message to the second terminal device, and send a third synchronization indication message to the third terminal device, and correspondingly, the second terminal device may receive the second synchronization indication message from the fourth network device, and the third terminal device may receive the third synchronization indication message from the fourth network device.

For related descriptions of "the first network device may determine a second resource from the first resource and send a first synchronization indication message to the first terminal device, and correspondingly, the first terminal device may receive the first synchronization indication message from the first network device; and the fourth network device may determine a sixth resource from the fifth resource and send a second synchronization indication message to the second terminal device, and correspondingly, the second terminal device may receive the second synchronization indication message from the fourth network device" in S1104, refer to the descriptions of S804. Details are not described herein again.

The seventh resource may be used by the third terminal device to perform uplink synchronization with the second network device.

For example, information about the seventh resource may include one or more of the following information: identification information of a random access preamble sent by the third terminal device when the third terminal device performs uplink synchronization with the second network device (for example, identification information of the third random access preamble), information about a time-frequency position at which the third terminal device sends the random access preamble when the third terminal device performs uplink synchronization with the second network device (for example, information about a third time-frequency position), and information about a beam direction corresponding to the information about the time-frequency position at which the third terminal device sends the random access preamble when the third terminal device performs uplink synchronization with the second network device (for example, information about a third beam direction, where the third beam direction is used by the third terminal device to determine the third time-frequency position).

The third synchronization indication message may indicate the third terminal device to perform uplink synchronization with the second network device.

For example, the third synchronization indication message may include one or more of the following information: the identification information of the third random access preamble and the information about the third time-frequency position, and the information about the third beam direction. In other words, the third synchronization indication message may include information about the seventh resource.

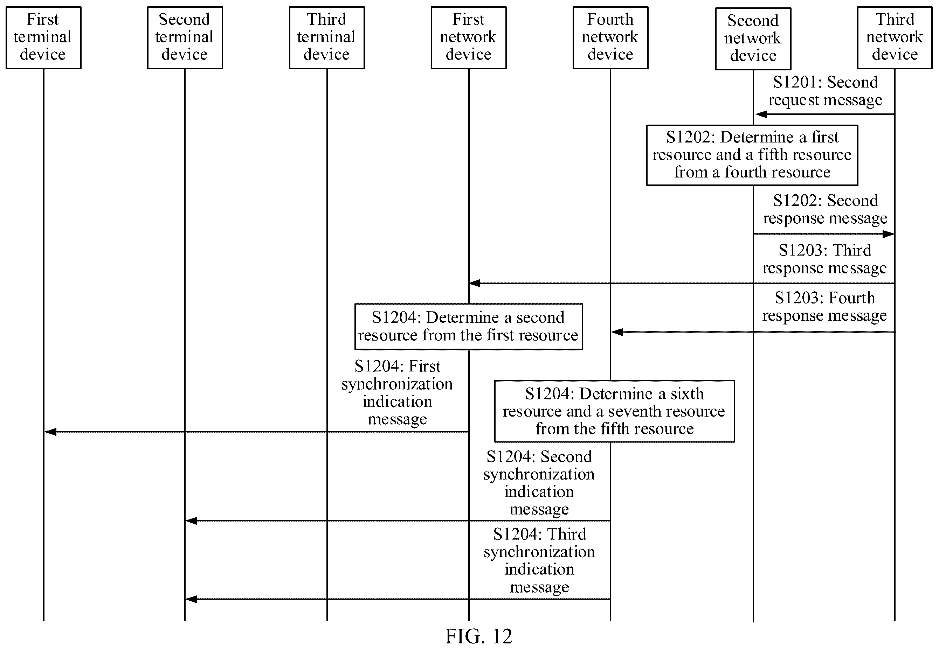

Based on the implementation process in FIG. 10, steps shown in FIG. 12 may be further performed in this application.

In S1201, a third network device may send a second request message to the second network device, and correspondingly, the second network device may receive the second request message from the third network device.

For S1201, refer to the descriptions of S801. Details are not described herein again.

In S1202, the second network device may determine a first resource and a fifth resource from a fourth resource and send a second response message to the third network device, and correspondingly, the third network device receives the second response message from the second network device.

For S1202, refer to the descriptions of S802. Details are not described herein again.

In S1203, the third network device may send a third response message to the first network device and send a fourth response message to a fourth network device, and correspondingly, the first network device may receive the third response message from the third network device, and the fourth network device may receive the fourth response message from the third network device.

For S1203, refer to the descriptions of S803. Details are not described herein again.

In S1204, the first network device may determine a second resource from the first resource and send a first synchronization indication message to the first terminal device, and correspondingly, the first terminal device may receive the first synchronization indication message from the first network device; and the fourth network device may determine a sixth resource and a seventh resource from the fifth resource, send a second synchronization indication message to the second terminal device, and send a third synchronization indication message to the third terminal device, and correspondingly, the second terminal device may receive the second synchronization indication message from the fourth network device, and the third terminal device may receive the third synchronization indication message from the fourth network device.

For S1204, refer to the descriptions of S1104. Details are not described herein again.

S1002: The second network device sends a ninth message to the third network device, and correspondingly, the third network device receives the ninth message from the second network device.

The second network device may send the ninth message to the third network device, and correspondingly, the third network device may receive the ninth message from the second network device. The ninth message may indicate the first TA, the ninth message may indicate the second TA, or the ninth message may indicate the third TA.

When the ninth message indicates the first TA, in an implementation, the ninth message may include third information. The third information indicates that the first TA corresponds to the first terminal device, or the third information indicates that the first TA corresponds to the first network device to which a first source cell of the first terminal device belongs. The third information may include one or more of the following information: identification information of the first random access preamble and information about a first time-frequency position. For example, the ninth message indicates a TA 1, and the third information in the ninth message may include a random access preamble 1, a random access channel occasion 1, a random access-radio network temporary identifier 1, and a system frame number 1.

In another implementation, the third information may further include second identification information, indicating the first source cell or the first network device.

In still another implementation, the third information may further include first identification information, indicating a first target cell or the second network device.

In still another implementation, the third information may further include identification information of the first terminal device.

In still another implementation, because the third network device may divide the fourth resource into the first resource and the fifth resource at a granularity of a cell, in other words, the first resource may be a resource corresponding to a first BWP of at least one candidate cell, and the fifth resource may be a resource corresponding to a second BWP of the at least one candidate cell, the third information may further include identification information of the first BWP.

Similarly, when the ninth message indicates the second TA, in an implementation, the ninth message may include third information. The third information indicates that the second TA corresponds to the second terminal device, or the third information indicates that the second TA corresponds to the fourth network device to which a second source cell of the second terminal device belongs. The third information may include one or more of the following information: identification information of the second random access preamble and information about a second time-frequency position. For example, the ninth message indicates a TA 2, and the third information in the ninth message may include a random access preamble 2, a random access channel occasion 2, a random access-radio network temporary identifier 2, and a system frame number 2.

In another implementation, the third information may further include fourth identification information, indicating the second source cell or the fourth network device.

In still another implementation, the third information may further include third identification information, indicating a second target cell or the second network device.

In still another implementation, the third information may further include identification information of the second terminal device.

In still another implementation, because the third network device may divide the fourth resource into the first resource and the fifth resource at a granularity of a cell, in other words, the first resource may be a resource corresponding to a first BWP of at least one candidate cell, and the fifth resource may be a resource corresponding to a second BWP of the at least one candidate cell, the third information may further include identification information of the second BWP.

When the ninth message indicates the third TA, in an implementation, the ninth message may include third information. The third information indicates that the third TA corresponds to the third terminal device, or the third information indicates that the third TA corresponds to the fourth network device to which a second source cell of the third terminal device belongs. The third information may include one or more of the following information: identification information of the third random access preamble and the information about the third time-frequency position. For example, when the ninth message indicates a TA 3, the third information in the ninth message may include a random access preamble 3, a random access channel occasion 3, a random access-radio network temporary identifier 3, and a system frame number 3.

In another implementation, the third information may further include fifth identification information, indicating a third source cell or the fourth network device.

In still another implementation, the third information may further include third identification information, indicating a second target cell or the second network device.

In still another implementation, the third information may further include identification information of the third terminal device.

In still another implementation, because the third network device may divide the fourth resource into the first resource and the fifth resource at a granularity of a cell, in other words, the first resource may be a resource corresponding to a first BWP of at least one candidate cell, and the fifth resource may be a resource corresponding to a second BWP of the at least one candidate cell, the third information may further include identification information of the second BWP.

S1003: The third network device sends the ninth message to the first network device or the fourth network device based on the third information, and correspondingly, the first network device or the fourth network device receives the ninth message from the third network device.

In this embodiment of this application, when the ninth message indicates the first TA, if the third information includes the identification information of the first random access preamble and the information about the first time-frequency position, or the third information includes the second identification information, the third network device may determine, based on the identification information of the first random access preamble and the information about the first time-frequency position, or based on the second identification information, that the first TA indicated by the ninth message corresponds to the first network device to which the first source cell belongs, and send the ninth message to the first network device.

Similarly, when the ninth message indicates the second TA, if the third information includes the identification information of the second random access preamble and the information about the second time-frequency position, or the third information includes the fourth identification information, the third network device may determine, based on the identification information of the second random access preamble and the information about the second time-frequency position, or based on the fourth identification information, that the second TA indicated by the ninth message corresponds to the fourth network device to which the second source cell belongs, and send the ninth message to the fourth network device.

When the ninth message indicates the third TA, if the third information includes the identification information of the third random access preamble and the information about the third time-frequency position, or the third information includes the fourth identification information, the third network device may determine, based on the identification information of the third random access preamble and the information about the third time-frequency position, or based on the fourth identification information, that the third TA indicated by the ninth message corresponds to the fourth network device to which the second source cell belongs, and send the ninth message to the fourth network device.

S1004: The first network device sends the first TA to the first terminal device based on the third information, the fourth network device sends the second TA to the second terminal device based on the third information, or the fourth network device sends the third TA to the third terminal device based on the third information.

In this embodiment of this application, when the ninth message indicates the first TA, the first network device may determine whether the third information in the ninth message matches information about the first resource provided for the first terminal device, for example, the identification information of the first random access preamble, the information about the first time-frequency position, the second identification information, or the first identification information. If the third information in the ninth message matches the information about the first resource provided for the first terminal device, the first network device may determine that the first TA indicated by the ninth message corresponds to the first terminal device, and send the first TA to the first terminal device.

Alternatively, if the third information in the ninth message includes the identification information of the first terminal device, the first network device may determine that the first TA indicated by the ninth message corresponds to the first terminal device, and send the first TA to the first terminal device.

Similarly, when the ninth message indicates the second TA, the fourth network device may determine whether the third information in the ninth message matches information about the sixth resource provided for the second terminal device, for example, the identification information of the second random access preamble, the information about the second time-frequency position, the fourth identification information, and the third identification information. If the third information in the ninth message matches the information about the sixth resource provided for the second terminal device, the fourth network device may determine that the second TA indicated by the ninth message corresponds to the second terminal device, and send the second TA to the second terminal device.

Alternatively, if the third information in the ninth message includes the identification information of the second terminal device, the fourth network device may determine that the second TA indicated by the ninth message corresponds to the second terminal device, and send the second TA to the second terminal device.

When the ninth message indicates the third TA, the fourth network device may determine whether the third information in the ninth message matches information about the seventh resource provided for the third terminal device, for example, the identification information of the third random access preamble, the information about the third time-frequency position, the fifth identification information, and the third identification information. If the third information in the ninth message matches the information about the seventh resource provided for the third terminal device, the fourth network device may determine that the third TA indicated by the ninth message corresponds to the third terminal device, and send the third TA to the third terminal device.

Alternatively, if the third information in the ninth message includes the identification information of the third terminal device, the fourth network device may determine that the third TA indicated by the ninth message corresponds to the third terminal device, and send the third TA to the third terminal device.

It may be understood that, to implement the functions in the foregoing embodiments, a network device and a terminal device include corresponding hardware structures and/or software modules for performing the functions. A person skilled in the art should be easily aware that, with reference to the units and method steps in the examples described in embodiments disclosed in this application, this application can be implemented in a form of hardware or a combination of hardware and computer software. Whether a function is performed by hardware or hardware driven by computer software depends on particular application scenarios and design constraint conditions of the technical solutions.

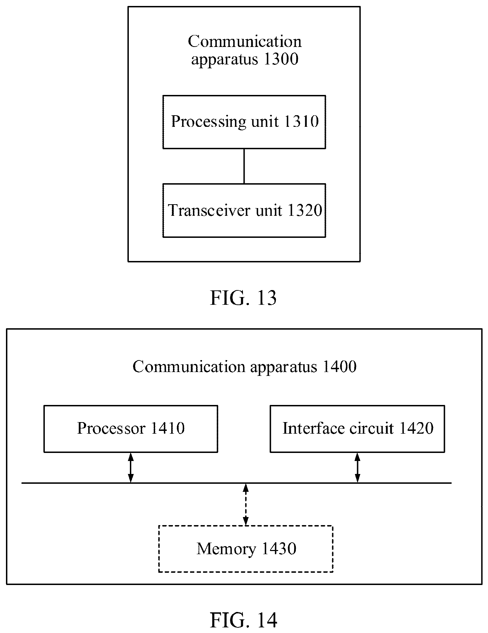

FIG. 13 is a diagram of a structure of a possible communication apparatus according to an embodiment of this application. The communication apparatus may be configured to implement a function of the network device or the terminal device in the foregoing method embodiments, and therefore can also implement beneficial effects of the foregoing method embodiments. In this embodiment of this application, the communication apparatus may be the network device shown in FIG. 1, may be the terminal device shown in FIG. 1, or may be a module (for example, a chip) used in the network device or the terminal device.

As shown in FIG. 13, the communication apparatus 1300 includes a processing unit 1310 and a transceiver unit 1320. The processing unit 1310 is configured to control the transceiver unit 1320 to implement the function of the network device or the terminal device in the foregoing method embodiments. The terminal device may be a first terminal device, a second terminal device, or a third terminal device. The network device may be a first network device, a second network device, a third network device, or a fourth network device.

For example, when the communication apparatus 1300 is configured to implement a function of the first network device in the foregoing method embodiments, the transceiver unit 1320 is configured to: receive a first message from a second network device, where the first message indicates a first TA, the first message includes first information, and the first information includes: identification information of a first random access preamble and information about a first time-frequency position for sending the first random access preamble; identification information of a first terminal device; or the identification information of the first random access preamble, the information about the first time-frequency position, and the identification information of the first terminal device; and send the first TA to the first terminal device based on the first information.

For example, when the communication apparatus 1300 is configured to implement a function of the second network device in the foregoing method embodiments, the transceiver unit 1320 is configured to: receive a first random access preamble from a first terminal device; and send a first message to a first network device, where the first message indicates a first TA, the first message includes first information, and the first information includes: identification information of the first random access preamble and information about a first time-frequency position for sending the first random access preamble; identification information of the first terminal device; or the identification information of the first random access preamble, the information about the first time-frequency position, and the identification information of the first terminal device. Alternatively, the transceiver unit 1320 is configured to: receive a first random access preamble from a first terminal device; and send a fifth message to a third network device, where the fifth message indicates a first TA, the fifth message includes second information, the second information indicates that the first TA corresponds to a first network device to which a first source cell of the first terminal device belongs, and the second information includes: identification information of the first random access preamble and information about a first time-frequency position for sending the first random access preamble; second identification information; or the identification information of the first random access preamble, the information about the first time-frequency position, and the second identification information.

For example, when the communication apparatus 1300 is configured to implement a function of the third network device in the foregoing method embodiments, the transceiver unit 1320 is configured to: receive a fifth message from a second network device, where the fifth message indicates a first TA, the fifth message includes second information, and the second information includes: identification information of the first random access preamble and information about a first time-frequency position for sending the first random access preamble; second identification information; or the identification information of the first random access preamble, the information about the first time-frequency position, and the second identification information; and send the fifth message to a first network device based on the second information.

For more detailed descriptions about the processing unit 1310 and the transceiver unit 1320, directly refer to related descriptions in the foregoing method embodiments. Details are not described herein again.

FIG. 14 is a diagram of a structure of another possible communication apparatus according to an embodiment of this application. The communication apparatus 1400 includes a processor 1410 and an interface circuit 1420. The processor 1410 and the interface circuit 1420 are coupled to each other. It may be understood that the interface circuit 1420 may be a transceiver or an input/output interface. Optionally, the communication apparatus 1400 may further include a memory 1430, configured to store instructions to be executed by the processor 1410, or store input data required by the processor 1410 to run the instructions, or store data generated after the processor 1410 runs the instructions.

When the communication apparatus 1400 is configured to implement the method in the foregoing method embodiments, the processor 1410 is configured to implement a function of the processing unit 1310, and the interface circuit 1420 is configured to implement a function of the transceiver unit 1320.

When the communication apparatus is a chip used in a terminal device, the chip in the terminal device implements the function of the terminal device in the foregoing method embodiments. The chip in the terminal device receives information from another module (for example, a radio frequency module or an antenna) in the terminal device, where the information is sent by a network device to the terminal device. Alternatively, the chip in the terminal device sends information to another module (for example, a radio frequency module or an antenna) in the terminal device, where the information is sent by the terminal device to a network device.

When the communication apparatus is a module used in a network device, the module in the network device implements a function of the network device in the foregoing method embodiments. The module in the network device receives information from another module (for example, a radio frequency module or an antenna) in the network device, where the information is sent by a terminal device to the network device. Alternatively, the module in the network device sends information to another module (for example, a radio frequency module or an antenna) in the network device, where the information is sent by the network device to a terminal device. The module in the network device herein may be a baseband chip of the network device, or may be a DU or another module. The DU herein may be a DU in an open radio access network (open radio access network, O-RAN) architecture.

It may be understood that, the processor in embodiments of this application may be a central processing unit (Central Processing Unit, CPU), or may be another general-purpose processor, a digital signal processor (Digital Signal Processor, DSP), an application specific integrated circuit (Application Specific Integrated Circuit, ASIC), a field programmable gate array (Field Programmable Gate Array, FPGA) or another programmable logic device, a transistor logic device, a hardware component, or any combination thereof. The general-purpose processor may be a microprocessor, any conventional processor, or the like.

Based on a same technical concept, an embodiment of this application further provides a computer-readable storage medium, including a program or instructions. When the program or the instructions are run on a computer, the method in the foregoing method embodiments is performed.

Based on a same technical concept, an embodiment of this application further provides a computer program product, including instructions. When the instructions are run on a computer, the method in the foregoing method embodiments is performed.

A person skilled in the art should understand that embodiments of this application may be provided as a method, a system, or a computer program product. Therefore, this application may use a form of hardware only embodiments, software only embodiments, or embodiments with a combination of software and hardware. In addition, this application may use a form of a computer program product that is implemented on one or more computer-usable storage media (including but not limited to a disk memory, a CD-ROM, an optical memory, and the like) that include computer-usable program code.

This application is described with reference to the flowcharts and/or block diagrams of the method, the device (system), and the computer program product according to this application. It should be understood that computer program instructions may be used for implementing each procedure and/or each block in the flowcharts and/or the block diagrams and a combination of a procedure and/or a block in the flowcharts and/or the block diagrams. These computer program instructions may be provided for a general-purpose computer, a dedicated computer, an embedded processor, or a processor of another programmable data processing device to generate a machine, so that the instructions executed by the computer or the processor of the another programmable data processing device generate an apparatus for implementing a specific function in one or more procedures in the flowcharts and/or in one or more blocks in the block diagrams.

These computer program instructions may be stored in a computer-readable memory that can instruct the computer or any other programmable data processing device to work in a specific manner, so that the instructions stored in the computer-readable memory generate an artifact that includes an instruction apparatus. The instruction apparatus implements a specific function in one or more procedures in the flowcharts and/or in one or more blocks in the block diagrams.

The computer program instructions may alternatively be loaded onto a computer or another programmable data processing device, so that a series of operations and steps are performed on the computer or the another programmable device, so that computer-implemented processing is generated. Therefore, the instructions executed on the computer or the another programmable device provide steps for implementing a specific function in one or more procedures in the flowcharts and/or in one or more blocks in the block diagrams.

It is clearly that a person skilled in the art can make various modifications and variations to this application without departing from the spirit and scope of this application. This application is intended to cover these modifications and variations provided that they fall within the scope of the claims of this application and their equivalent technologies.

## Claims

1. A timing advance acquisition method, applied to a first network device, wherein the first network device is a network device to which a first source cell of a first terminal device belongs, and the method comprises:
receiving a first message from a second network device, wherein the second network device is a network device to which at least one candidate cell of the first terminal device belongs, the first message indicates a first timing advance TA, the first message comprises first information, and the first information comprises:
identification information of a first random access preamble and information about a first time-frequency position for sending the first random access preamble; identification information of the first terminal device; or the identification information of the first random access preamble, the information about the first time-frequency position, and the identification information of the first terminal device; and
sending the first TA to the first terminal device based on the first information.

2. The method according to claim 1, wherein before receiving the first message from the second network device, the method further comprises:
sending a second message to the first terminal device, wherein the second message indicates the first terminal device to perform uplink synchronization with the second network device, and the second message comprises one or more of the following information:
the identification information of the first random access preamble and the information about the first time-frequency position; or
information about a first beam direction used to determine the first time-frequency position.

3. The method according to claim 1 or 2, wherein sending the first TA to the first terminal device based on the first information comprises:
determining, based on the first information, that the first TA corresponds to the first terminal device; and
sending the first TA to the first terminal device.

4. The method according to any one of claims 1 to 3, wherein the information about the first time-frequency position comprises one or more of the following Information:
identification information of a random access channel occasion;
information about a random access-radio network temporary identifier; or
indication information of a system frame number, indicating a value of at least one bit of the system frame number.

5. The method according to any one of claims 1 to 4, wherein the first information further comprises first identification information, the first identification information indicates a first target cell of the first terminal device or the second network device, and the first target cell is any one of the at least one candidate cell.

6. The method according to claim 2, wherein before sending the second message to the first terminal device, the method further comprises:
receiving a third message from the second network device, wherein the third message indicates a first resource of the at least one candidate cell, and the first resource is used by a terminal device in the first source cell to perform uplink synchronization with the second network device.

7. The method according to claim 6, wherein the method further comprises:
determining a second resource from the first resource, wherein the second resource is used by the first terminal device to perform uplink synchronization with the second network device, and information about the second resource comprises one or more of the following information:
the identification information of the first random access preamble and the information about the first time-frequency position; or
the information about the first beam direction.

8. The method according to claim 6 or 7, wherein before receiving the third message from the second network device, the method further comprises:
sending a fourth message to the second network device, wherein the fourth message is used to request the first resource, and the fourth message comprises information about a quantity of first resources.

9. The method according to claim 8, wherein the fourth message further comprises one or more of the following information:
first identification information, indicating a first target cell of the first terminal device or the second network device, wherein the first target cell is any one of the at least one candidate cell; or
second identification information, indicating the first source cell or the first network device.

10. The method according to any one of claims 1 to 9, wherein the first network device is a first distributed unit DU belonging to a first central unit CU, the second network device is a second DU belonging to the first CU, and a message is transmitted between the first network device and the second network device through the first CU; or
the first network device is a first DU belonging to a first CU, the second network device is a second DU belonging to a second CU, and a message is transmitted between the first network device and the second network device through the first CU and the second CU.

11. A timing advance acquisition method, applied to a second network device, wherein the second network device is a network device to which at least one candidate cell of a first terminal device belongs, and the method comprises:
receiving a first random access preamble from the first terminal device; and
sending a first message to a first network device, wherein the first network device is a network device to which a first source cell of the first terminal device belongs, the first message indicates a first TA, the first message comprises first information, the first information indicates that the first TA corresponds to the first terminal device, and the first information comprises:
identification information of the first random access preamble and information about a first time-frequency position for sending the first random access preamble; identification information of the first terminal device; or the identification information of the first random access preamble, the information about the first time-frequency position, and the identification information of the first terminal device.

12. The method according to claim 11, wherein the information about the first time-frequency position comprises one or more of the following Information:
identification information of a random access channel occasion;
information about a random access-radio network temporary identifier; or
indication information of a system frame number, indicating a value of at least one bit of the system frame number.

13. The method according to claim 11 or 12, wherein the first information further comprises first identification information, the first identification information indicates a first target cell of the first terminal device or the second network device, and the first target cell is any one of the at least one candidate cell.

14. The method according to any one of claims 11 to 13, wherein before receiving the first random access preamble from the first terminal device, the method further comprises:
sending a third message to the first network device, wherein the third message indicates a first resource of the at least one candidate cell, and the first resource is used by a terminal device in the first source cell to perform uplink synchronization with the second network device.

15. The method according to claim 14, wherein before sending the third message to the first network device, the method further comprises:
receiving a fourth message from the first network device, wherein the fourth message is used to request the first resource, and the fourth message comprises information about a quantity of first resources.

16. The method according to claim 15, wherein the fourth message further comprises one or more of the following information:
the first identification information, indicating the first target cell of the first terminal device or the second network device, wherein the first target cell is any one of the at least one candidate cell; or
second identification information, indicating the first source cell or the first network device.

17. The method according to any one of claims 11 to 16, wherein the first information comprises the identification information of the first terminal device; and before sending the first message to the first network device, the method further comprises:
receiving the identification information of the first terminal device from the first terminal device.

18. The method according to any one of claims 11 to 17, wherein the first network device is a first DU belonging to a first CU, the second network device is a second DU belonging to the first CU, and a message is transmitted between the first network device and the second network device through the first CU; or
the first network device is a first DU belonging to a first CU, the second network device is a second DU belonging to a second CU, and a message is transmitted between the first network device and the second network device through the first CU and the second CU.

19. A timing advance acquisition method, applied to a second network device, wherein the second network device is a network device to which at least one candidate cell of a first terminal device belongs, and the method comprises:
receiving a first random access preamble from the first terminal device; and
sending a fifth message to a third network device, wherein the fifth message indicates a first TA, the fifth message comprises second information, the second information indicates that the first TA corresponds to a first network device to which a first source cell of the first terminal device belongs, and the second information comprises:
identification information of the first random access preamble and information about a first time-frequency position for sending the first random access preamble; second identification information, indicating the first source cell or the first network device; or the identification information of the first random access preamble, the information about the first time-frequency position, and the second identification information.

20. The method according to claim 19, wherein the information about the first time-frequency position comprises one or more of the following Information:
identification information of a random access channel occasion;
information about a random access-radio network temporary identifier; or
indication information of a system frame number, indicating a value of at least one bit of the system frame number.

21. The method according to claim 19 or 20, wherein before receiving the first random access preamble from the first terminal device, the method further comprises:
sending a sixth message to the third network device, wherein the sixth message indicates a fourth resource of the at least one candidate cell, the fourth resource is used by terminal devices in the first source cell and a second source cell of a second terminal device to perform uplink synchronization with the second network device, and a network device to which the second source cell belongs is a fourth network device.

22. The method according to claim 21, wherein before sending the sixth message to the third network device, the method further comprises:
receiving a seventh message from the third network device, wherein the seventh message is used to request the fourth resource, and the seventh message comprises information about a quantity of fourth resources.

23. The method according to claim 22, wherein the seventh message further comprises one or more of the following information:
first identification information, indicating a first target cell of the first terminal device or the second network device, wherein the first target cell is any one of the at least one candidate cell;
the second identification information;
third identification information, indicating a second target cell of the second terminal device or the second network device, wherein the second target cell is any one of the at least one candidate cell; or
fourth identification information, indicating the second source cell.

24. The method according to claim 23, wherein before sending the sixth message to the third network device, the method further comprises:
determining a first resource and a fifth resource from the fourth resource, wherein the first resource is used by the terminal device in the first source cell to perform uplink synchronization with the second network device, the fifth resource is used by the terminal device in the second source cell to perform uplink synchronization with the second network device, and the first resource is different from the fifth resource.

25. The method according to claim 24, wherein the second information comprises the second identification information; and after receiving the first random access preamble from the first terminal device, the method comprises:
determining the second identification information based on the first random access preamble and the first resource.

26. The method according to any one of claims 19 to 25, wherein the third network device is a first CU, the first network device is a first DU belonging to the first CU, the second network device is a second DU belonging to the first CU, and a message is transmitted between the first network device and the second network device through the first CU; or
the third network device is a second CU, the first network device is a first DU belonging to a first CU, the second network device is a second DU belonging to the second CU, and a message is transmitted between the first network device and the second network device through the first CU and the second CU.

27. A timing advance acquisition method, applied to a third network device, wherein the method comprises:
receiving a fifth message from a second network device, wherein the second network device is a network device to which at least one candidate cell of a first terminal device belongs, the fifth message indicates a first TA, the fifth message comprises second information, and the second information comprises:
identification information of the first random access preamble and information about a first time-frequency position for sending the first random access preamble; second identification information, indicating a first source cell of the first terminal device or a first network device to which the first source cell belongs; or the identification information of the first random access preamble, the information about the first time-frequency position, and the second identification information; and
sending the fifth message to the first network device based on the second information.

28. The method according to claim 27, wherein sending the fifth message to the first network device based on the second information comprises:
determining, based on the second information, that the first TA corresponds to the first network device; and
sending the fifth message to the first network device.

29. The method according to claim 27 or 28, wherein the information about the first time-frequency position comprises one or more of the following information:
identification information of a random access channel occasion;
information about a random access-radio network temporary identifier; or
indication information of a system frame number, indicating a value of at least one bit of the system frame number.

30. The method according to any one of claims 27 to 29, wherein before receiving the fifth message from the second network device, the method further comprises:
receiving a sixth message from the second network device, wherein the sixth message indicates a fourth resource of the at least one candidate cell, the fourth resource is used by terminal devices in the first source cell and a second source cell of a second terminal device to perform uplink synchronization with the second network device, and a network device to which the second source cell belongs is a fourth network device;
determining a first resource and a fifth resource from the fourth resource, wherein the first resource is used by the terminal device in the first source cell to perform uplink synchronization with the second network device, the fifth resource is used by the terminal device in the second source cell to perform uplink synchronization with the second network device, and the first resource is different from the fifth resource; and
sending an eighth message to the first network device, wherein the eighth message indicates the first resource.

31. The method according to claim 30, wherein the first resource is a resource corresponding to a first bandwidth part BWP of the at least one candidate cell, and the fifth resource is a resource corresponding to a second BWP of the at least one candidate cell.

32. The method according to claim 31, wherein the second information further comprises identification information of the first BWP.

33. The method according to any one of claims 30 to 32, wherein before receiving the sixth message from the second network device, the method further comprises:
sending a seventh message to the second network device, wherein the seventh message is used to request the fourth resource, and the seventh message comprises information about a quantity of fourth resources.

34. The method according to claim 33, wherein the seventh message further comprises one or more of the following information:
first identification information, indicating a first target cell of the first terminal device or the second network device, wherein the first target cell is any one of the at least one candidate cell;
the second identification information;
third identification information, indicating a second target cell of the second terminal device or the second network device, wherein the second target cell is any one of the at least one candidate cell; or
fourth identification information, indicating the second source cell.

35. The method according to any one of claims 27 to 34, wherein the third network device is a first CU, the first network device is a first DU belonging to the first CU, the second network device is a second DU belonging to the first CU, and a message is transmitted between the first network device and the second network device through the first CU; or
the third network device is a second CU, the first network device is a first DU belonging to a first CU, the second network device is a second DU belonging to the second CU, and a message is transmitted between the first network device and the second network device through the first CU and the second CU.

36. A timing advance acquisition method, applied to a first network device, wherein the first network device is a network device to which a first source cell of a first terminal device belongs, and the method comprises:
sending a first switch command to the first terminal device, wherein the first switch command comprises a TA field; and when a value of the TA field is a first value, the first value indicates one or more of the following:
the first network device fails to obtain a first TA; the first TA is invalid; or the first terminal device accesses a second network device via random access, wherein the second network device is a network device to which at least one candidate cell of the first terminal device belongs.

37. The method according to claim 36, wherein the TA field comprises m binary bits; and when the value of the TA field is the first value, all the m binary bits are set to 1, wherein m is a positive integer.

38. The method according to claim 36 or 37, wherein when the value of the TA field is a second value, the second value indicates that the first TA is valid.

39. A timing advance acquisition method, comprising:
receiving a first switch command from a first network device, wherein the first switch command comprises a TA field, and the first network device is a network device to which a first source cell of a first terminal device belongs; and
when a value of the TA field is a first value, determining one or more of the following based on the first value:
the first network device fails to obtain a first TA; the first TA is invalid; or the first terminal device accesses a second network device via random access, wherein the second network device is a network device to which at least one candidate cell of the first terminal device belongs.

40. The method according to claim 39, wherein the TA field comprises m binary bits; and when the value of the TA field is the first value, all the m binary bits are set to 1, wherein m is a positive integer.

41. The method according to claim 39 or 40, wherein when the value of the TA field is a second value, the first TA is determined, based on the second value, to be valid.

42. A communication apparatus, comprising a module configured to perform the method according to any one of claims 1 to 10, a module configured to perform the method according to any one of claims 11 to 18, a module configured to perform the method according to any one of claims 19 to 26, a module configured to perform the method according to any one of claims 27 to 35, a module configured to perform the method according to any one of claims 36 to 38, or a module configured to perform the method according to any one of claims 39 to 41.

43. A communication apparatus, comprising a processor and an interface circuit, wherein the interface circuit is configured to receive a signal from another communication apparatus different from the communication apparatus and transmit the signal to the processor, or send a signal from the processor to another communication apparatus different from the communication apparatus, and the processor is configured to implement, through a logic circuit or by executing code instructions, the method according to any one of claims 1 to 10, the method according to any one of claims 11 to 18, the method according to any one of claims 19 to 26, the method according to any one of claims 27 to 35, the method according to any one of claims 36 to 38, or the method according to any one of claims 39 to 41.

44. A computer-readable storage medium, comprising a program or instructions, wherein when the program or the instructions are run on a computer, the method according to any one of claims 1 to 10 is performed, the method according to any one of claims 11 to 18 is performed, the method according to any one of claims 19 to 26 is performed, the method according to any one of claims 27 to 35 is performed, the method according to any one of claims 36 to 38 is performed, or the method according to any one of claims 39 to 41 is performed.

45. A computer program product, comprising a computer program, wherein when the computer program is executed by a communication apparatus, the method according to any one of claims 1 to 10 is implemented, the method according to any one of claims 11 to 18 is implemented, the method according to any one of claims 19 to 26 is implemented, the method according to any one of claims 27 to 35 is implemented, the method according to any one of claims 36 to 38 is implemented, or the method according to any one of claims 39 to 41 is implemented.

46. A communication system, wherein the communication system comprises a first network device, a second network device, a third network device, and a first terminal device, wherein the first network device is configured to implement the method according to any one of claims 1 to 10 or the method according to any one of claims 36 to 38, the second network device is configured to implement the method according to any one of claims 11 to 18 or the method according to any one of claims 19 to 26, the third network device is configured to implement the method according to any one of claims 27 to 35, and the first terminal device is configured to implement the method according to any one of claims 39 to 41.
